Europäisches Patentamt

European Patent Office

Office européen des brevets

(19)

(11) **EP 1 675 065 A2**

(12) # EUROPEAN PATENT APPLICATION

(43) Date of publication:
**28.06.2006 Bulletin 2006/26**

(51) Int Cl.:
***G06T 5/00*** (2006.01)

(21) Application number: **05257958.8**

(22) Date of filing: **22.12.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **27.12.2004 JP 2004376097**<br><br>(71) Applicant: **GE Medical Systems Global Technology Company, LLC**<br>**Waukesha,**<br>**Wisconsin 53188-1696 (US)** | (72) Inventor: **Nishide, Akihiko**<br>**Hino-shi,**<br>**Tokyo 191-8503 (JP)**<br><br>(74) Representative: **Pedder, James Cuthbert**<br>**London Patent Operation,**<br>**General Electric International, Inc.,**<br>**15 John Adam Street**<br>**London WC2N 6LU (GB)** |

(54) **Four dimensional labeling apparatus, N-dimensional labeling apparatus, four dimensional spatial filter apparatus, and N-dimensional spatial filter apparatus**

(57)   In a four-dimensional image composed of time-varying three-dimensional images or an N-dimensional image produced with N (≥4) independent parameters as a base, a four-dimensional continuous domain or an N-dimensional continuous domain is detected. Moreover, a four-dimensional spatial filter or an N-dimensional spatial filter is convoluted to the four-dimensional image or N-dimensional image in order to convert image quality. When the four-dimensional image is four-dimensionally scanned or the N-dimensional image is N-dimensionally scanned, continuity centered on a pixel concerned that is being scanned is checked in a three-dimensional space or an N-1-dimensional space. At the same time, continuity is checked along a time axis or an N-dimensional axis. The same label number is assigned to continuous four-dimensional domains or N-dimensional domains. Moreover, the value of the pixel concerned is converted or processed based on the relationship between the value of the pixel concerned that is being scanned and the values of pixels contained in a neighboring local domain.

Fig. 1

START

402
401

Four-dimensional image input unit ← Four-dimensional image (Time-sequential three-dimensional images)

403
406

Four-dimensional labeling unit ← Four-dimensional labeling neighbor mask

404

Four-dimensional label concatenation information storage unit

405

Re-labeling unit

END

EP 1 675 065 A2

**Description**

The present invention relates to four-dimensional labeling equipment, N-dimensional labeling apparatus, four-dimensional spatial filter apparatus, and N-dimensional spatial filter apparatus. More particularly, the present invention is concerned with four-dimensional labeling apparatus that labels a four-dimensional image composed of time-sequentially juxtaposed three-dimensional images, N-dimensional labeling apparatus that labels an N-dimensional image produced with N ($\geq$4) parameters as a base, four-dimensional filter apparatus that spatially filters a four-dimensional image composed of time-sequentially juxtaposed three-dimensional images, and N-dimensional spatial filter apparatus that spatially filters an N-dimensional image produced with N ($\geq$4) parameters as a base.

In general, two-dimensional image processing technologies include a labeling technology. What is referred to as labeling in the domain of image processing is processing of assigning numbers (label numbers or domain numbers) to continuous domains contained in a binary-coded image (in case of a color image or a shaded image, an image binary-coded according to a known method). The numbers are stored as image data, and an image produced based on the image data is called a label image (refer to Non-patent Document 1).

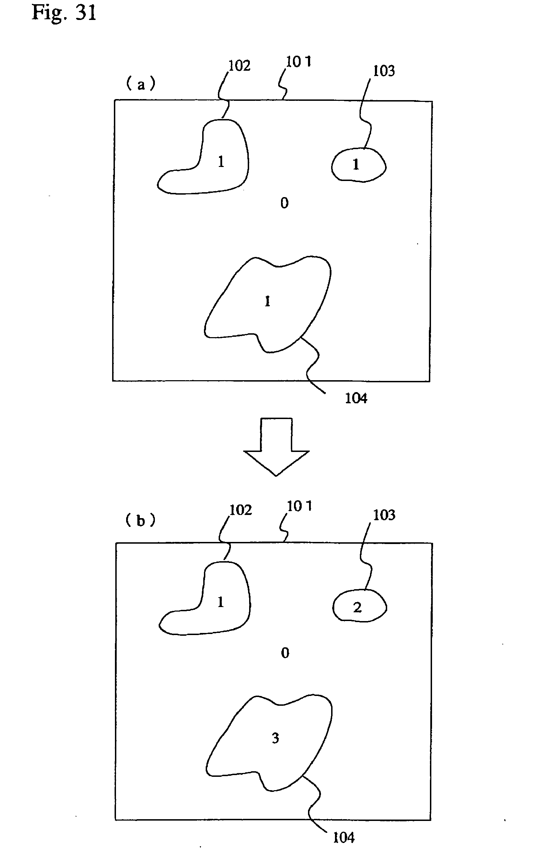

Fig. 31 outlines two-dimensional labeling.

In Fig. 31 (a), reference numeral 101 denotes a binary-coded image containing continuous image domains 102, 103, and 104. The pixels within the image domains 102, 103, and 104 assume a value 1, and the pixels in the other domain assume a value 0.

Fig. 31 (b) shows the result of labeling (domain numbering) performed on the binary-coded image 101 (labeling information). Label numbers 1, 2, and 3 are assigned to the continuous image domains 102, 103, and 104 respectively. The continuous image domains 102, 103, and 104 can be handled independently of one another according to desired processing. A value other than 0 employed in binary coding is set to 1 in this specification but may be set to 255 or any other numeral. In this specification, 1 is adopted but universality is not lost.

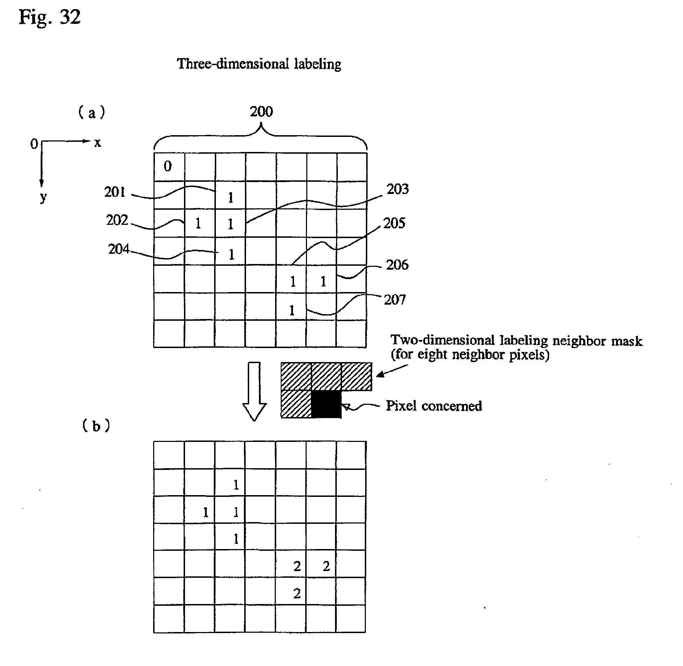

Using an example of an image shown in Fig. 32, two-dimensional labeling will be described concretely.

In Fig. 32(a), reference numeral 200 denotes a binary-coded image containing a group of pixels 201, 202, 203, and 204 that assume a value 1, and a group of pixels 205, 206, and 207 that assume the same value 1. The other pixels assume a value 0.

The binary-coded image 200 is scanned according to the raster scan method (the image is first scanned in an x-axis direction, has lines thereof sequentially changed in a y-axis direction, and is then scanned in the x-axis direction, again). Herein, the binary-coded image 200 is scanned from the left upper end thereof in the x-axis direction, and has the line changed at the right end of the line to the next line in the y-axis direction. The binary-coded image is then scanned in the x-axis direction in the same manner.

When a pixel having a value 1 is detected, a pixel having the value 1 is searched within a two-dimensional labeling neighbor mask (composed of, for example, eight neighbor pixels) surrounding the detected pixel regarded as a pixel concerned. Based on a label number having already been assigned to the pixel of the value 1 contained in the two-dimensional labeling neighbor mask, a label number is assigned to the pixel concerned.

In the example shown in Fig. 32(a), first, the pixel 201 is detected. A pixel having the value 1 is not contained in the two-dimensional labeling neighbor mask for the pixel 201. In this case, a number calculated by adding 1 to the previous label number is assigned to the pixel. However, since the pixel 201 is first detected, no previous label number is available. Therefore, the label number of the pixel 201 is determined as 1.

Thereafter, a pixel 202 is detected. A pixel having the value 1 is contained in the two-dimensional labeling neighbor mask for the pixel 202. Since the label number of the pixel is 1, the label number of 1 is adopted as the label number of the pixel 202.

Thereafter, a pixel 203 is detected. Pixels 201 and 202 contained in the two-dimensional labeling neighbor mask for the pixel 203 have the value 1. Since the label number 1 is assigned to the pixels 201 and 202, the label number 1 is adopted as the label number of the pixel 203.

Likewise, the label number of a pixel 204 is set to 1.

Thereafter, a pixel 205 is detected. A pixel having the value 1 is not contained in the two-dimensional labeling neighbor mask for the pixel 205. A value of 2 calculated by adding 1 to the previous label number 1 is adopted as the label number of the pixel 205.

Thereafter, a pixel 206 is detected. The pixel 205 having the value 1 is contained in the two-dimensional labeling neighbor mask for the pixel 205. Since the label number of the pixel 205 is 2, the label number of 2 is adopted as the label number of the pixel 206.

Likewise, the label number of a pixel 207 is set to 2.

Fig. 32(b) shows the result of labeling performed on the image 200 shown in Fig. 32(a). As seen from Fig. 32 (b), the same label number is assigned to all the pixels that have the value 1 and are contained in a continuous domain. Different label numbers are assigned to pixels contained in image domains that are not continuous.

Assume that different label numbers are assigned to a plurality of pixels having the value 1 and being contained in a labeling neighbor mask for a pixel concerned that has a value 1. In this case, the smallest label number among the label numbers is adopted as the label number of the pixel concerned. The fact that the label numbers assigned to the pixels are concatenated is recorded in a table. The table is used to perform re-labeling (renumbering) that converts the label numbers of the concatenated pixels into one label number.

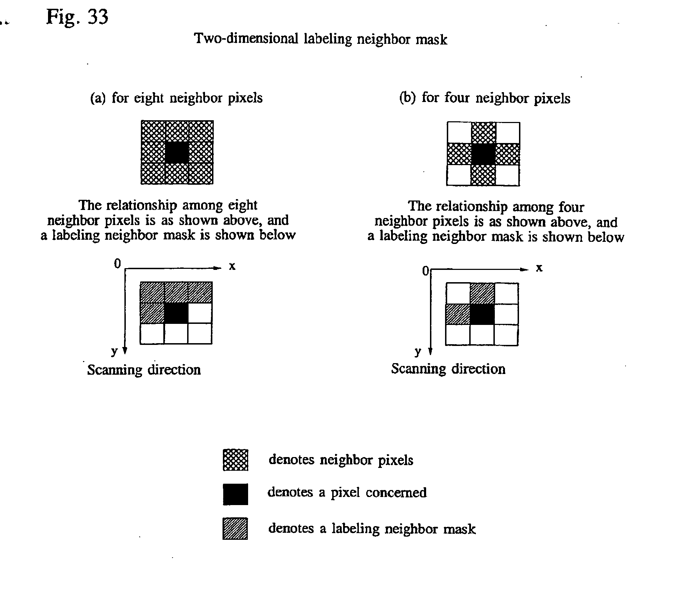

Fig. 33(a) shows a two-dimensional labeling neighbor mask for eight neighbor pixels, and Fig. 33(b) shows a two-dimensional labeling mask for four neighbor pixels.

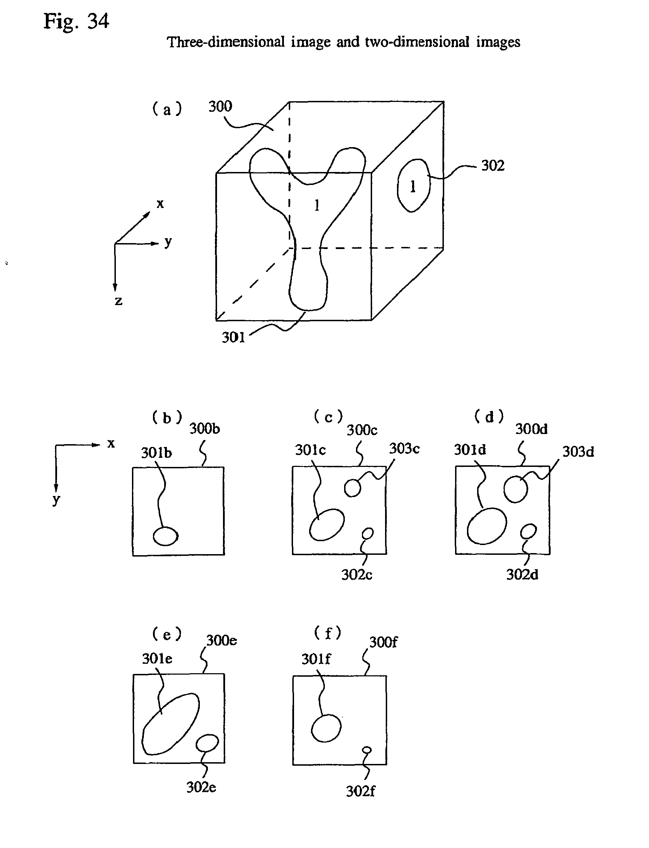

Referring to Fig. 34, a description will be made of a case where the foregoing two-dimensional labeling is adapted to a three-dimensional binary-coded image.

In Fig. 34(a), a three-dimensional image 300 is a three-dimensional binary-coded image comprising a set of pixels that are three-dimensionally arranged and assume a value of 0 or 1. The three-dimensional image 300 includes a three-dimensional image domain 301 composed of a group of pixels assuming the value 1, and a three-dimensional image domain 302 composed of a group of pixels assuming the value 1. The pixels other than those contained in the three-dimensional image domains 301 and 302 assume the value of 0.

The three-dimensional image 300 corresponds to a three-dimensional image produced by binary-coding a three-dimensional image, which is constructed by, for example, an X-ray CT system or an MRI system, on the basis of a certain threshold or through certain processing.

First, the three-dimensional image 300 shown in Fig. 34(a) is read in a z-axis direction in units of a plane (xy plane) perpendicular to the z-axis direction, whereby two-dimensional images 300b to 300f shown in Fig. 34(b) to Fig. 34(f) are sampled. Two-dimensional image domains 301 b to 301f and 303c to 303d are two-dimensional image domains contained in the three-dimensional image domain 301. Two-dimensional image domains 302b to 302f are two-dimensional image domains contained in the three-dimensional image domain 302.

Thereafter, two-dimensional labeling is performed on the two-dimensional images 300b to 300f. During the labeling, although, for example, two-dimensional image domains 301 c and 301 d are portions of the three-dimensional image domain 301, the same label number is not assigned to the two-dimensional image domains 301 c and 301 d. Therefore, two-dimensional image domains contained in the same three-dimensional image domain must be associated with each other in terms of two-dimensional images in which the two-dimensional image domains are contained. The relationship of concatenation in the z-axis direction among the two-dimensional image domains is checked and agreed with the relationship of concatenation among the two-dimensional images containing the two-dimensional image domains.

Known three-dimensional labeling apparatus that labels a three-dimensional image comprises: a three-dimensional labeling neighbor mask for use in referencing a group of neighbor pixels that neighbors a pixel concerned and that is distributed over a plane containing the pixel concerned and planes adjoining the plane; a labeling means for three-dimensionally scanning a three-dimensional image using the three-dimensional labeling neighbor mask, and assigning a label number to the pixel concerned on the basis of a pixel value and a label number of a pixel contained in the three-dimensional labeling neighbor mask for the pixel concerned; and a re-labeling means (see Patent Document 1 and Patent Document 2).

If a label number is assigned to a plurality of pixels within a neighbor mask for each pixel concerned, the labeling means records concatenation information signifying that the plurality of pixels is concatenated.

Based on the concatenation information, the re-labeling means performs re-labeling so as to unify domains of a plurality of different label numbers into one label number.

Fig. 35 shows a three-dimensional labeling neighbor mask for 26 neighbor pixels.

Fig. 36 shows two-dimensional images 601 a, 601 b, and 601 c contained in a three-dimensional image, and two-dimensional labeling neighbor masks 602 and 603 contained in a three-dimensional labeling neighbor mask.

Using the three-dimensional labeling neighbor mask, the three-dimensional image is scanned in the x, y, and z axes in that order from a point represented by a small coordinate to a point represented by a large coordinate. Thus, three-dimensional scan is achieved.

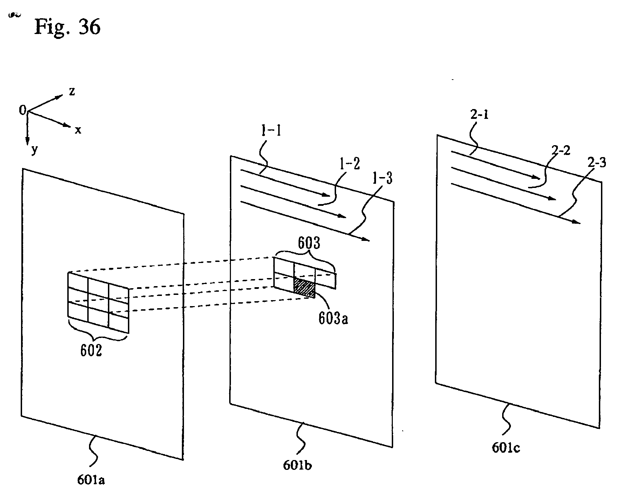

In Fig. 36, three-dimensional scan is started with a plane 601 a. However, since there is no plane in the z-axis direction above the plane 601 a, any of the following pieces of processing is performed:

(1) a label number 0 is assigned to all pixels constituting the plane 601 a;

(2) no label number is assigned to the all pixels constituting the plane 601 a but the pixel values are held intact; and

(3) the same processing as the one that is, as described below, performed on the plane 601 b and others is performed on the assumption that a plane composed of pixels having the value 0 is present in the z-axis direction above the plane 601 a.

Thereafter, on the plane 601 b, first, scan for a pixel concerned 603a is performed in the x-axis direction along a line 1-1. Lines are changed in the $\gamma$-axis direction, whereby scan is continued in the x-axis direction along a line 1-2, and then along a line 1-3. After scanning the plane 601 b is completed, planes are changed in the z-axis direction. On the plane 601 c, scan for the pixel concerned 603a is performed along lines 2-1, 2-2, 2-3, etc. While scan is thus continued, pixels having the same value of 1 as the pixel concerned 603a, that is, a domain composed of the pixels is searched. The label number of the pixel found first is set to 1. Thereafter, when a pixel having the value of 1 is found, label numbers assigned to pixels contained in the two-dimensional labeling neighbor masks 602 and 603 are referenced. If no label number has been assigned, 1 is added to the largest value among already assigned label numbers. The calculated value is adopted as the label number of the pixel having the value 1. If label numbers have been assigned to pixels, the smallest label number among them is adopted as the label number of the pixel having the value 1.

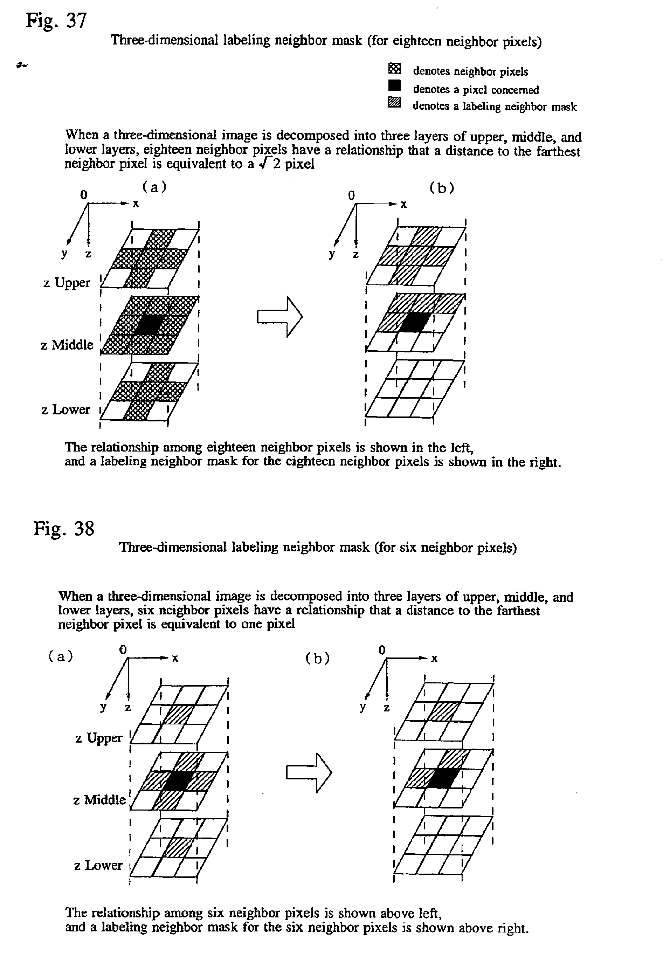

Incidentally, a three-dimensional labeling neighbor mask for eighteen neighbor pixels shown in Fig. 37 or a three-dimensional labeling neighbor mask for six neighbor pixels shown in Fig. 38 may be adopted.

A three-dimensional spatial filtering circuit and method are known, wherein desired three-dimensional spatial filtering is performed on a pixel concerned contained in data of a three-dimensional image having a three-dimensional matrix structure, such as, X-ray CT data, MRI-CT data, or three-dimensional simulation data, and data of a neighboring local domain of the pixel concerned (see Patent Document 3).

For example, a three-dimensional image $g(x,y,z)$ is constructed by stacking two-dimensional images (xy planes) in the z-axis direction, and a three-dimensional spatial filter $M(n,m,l)$ having a size of N by M by L (where N, M, and L denote odd numbers) is convoluted to the three-dimensional image g. In this case, a two-dimensional spatial filter having a size of N by M is convoluted to L two-dimensional images of xy planes. Specifically, assuming that a pixel concerned is located at a point represented by a z-coordinate $z=z0+(L-1)/2$, the three-dimensional image $g(x,y,z)$ is decomposed into images $g(x,y,z0)$, $g(x,y,z0+1)$. $g(x,y,z0+2)$, etc., and $g(x,y,0+L-1)$. Likewise, the three-dimensional spatial filter $M(n,m,l)$ is decomposed into filters $M(n,m,l)$, $M(n,m,2)$, $M(n,m,3)$, $M(n,m,4)$, etc., and $M(n,m,L)$. The filters are convoluted to the respective images as expressed below.

$$g(x,y,z0)*M(n,m,l)=g'(x,y,z0)$$

$$g(x,y,z0+1)*M(n,m,2)=g'(x,y,z0+1)$$

$$g(x,y,z0+2)*M(n,m,3)=g'(x,y,z0+2)$$

$$g(x,y,z0+3)*M(n,m,4)=g'(x,y,z0+3)$$

$$\ldots$$

$$g(x,y,z0+L-1)*M(n,m,L)=g'(x,y,z0+L-1)$$

The sum $g''(x,y,z0)$ of the above results $g'(x,y,z0)$, $g'(x,y,z0+1)$, $g'(x,y,z0+2)$, $g'(x,y,z0+3)$, ..., $g'(x,y,z0+L-1)$ is then calculated. The sum is the result of three-dimensional filter convolution relative to the pixel concerned $(x,y,z0+(L-1)/2)$.

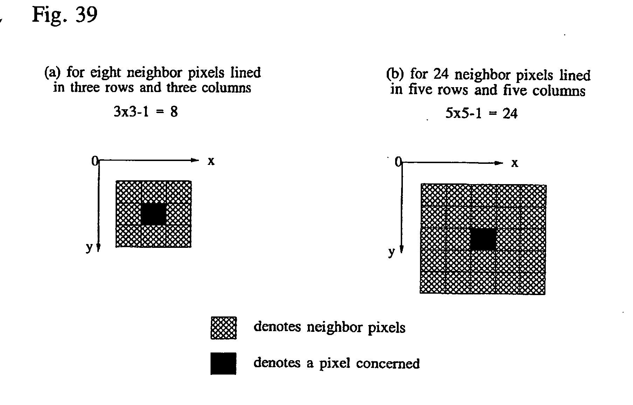

Fig. 39a shows a two-dimensional spatial filter neighboring local domain composed of eight neighbor pixels, and Fig. 39b shows a two-dimensional spatial filter neighboring local domain composed of twenty-four neighbor pixels.

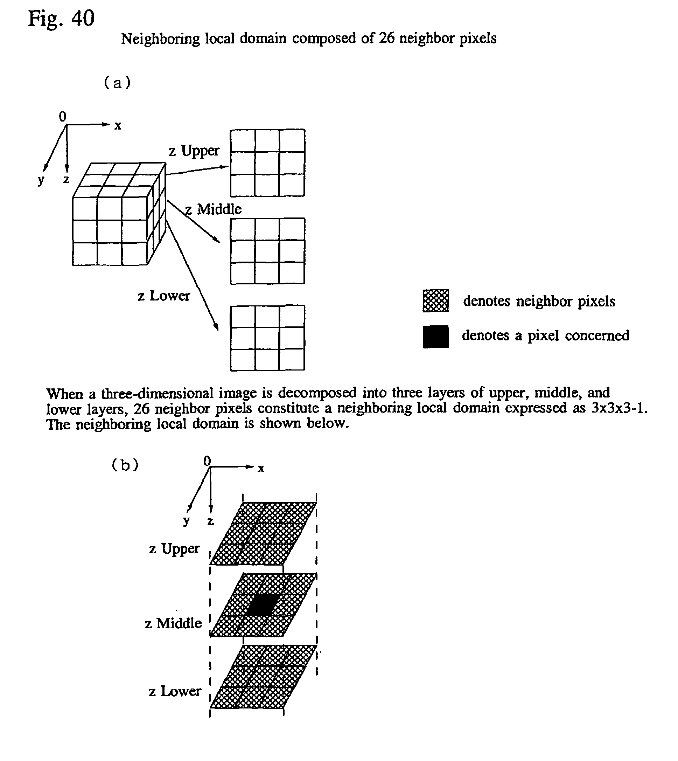

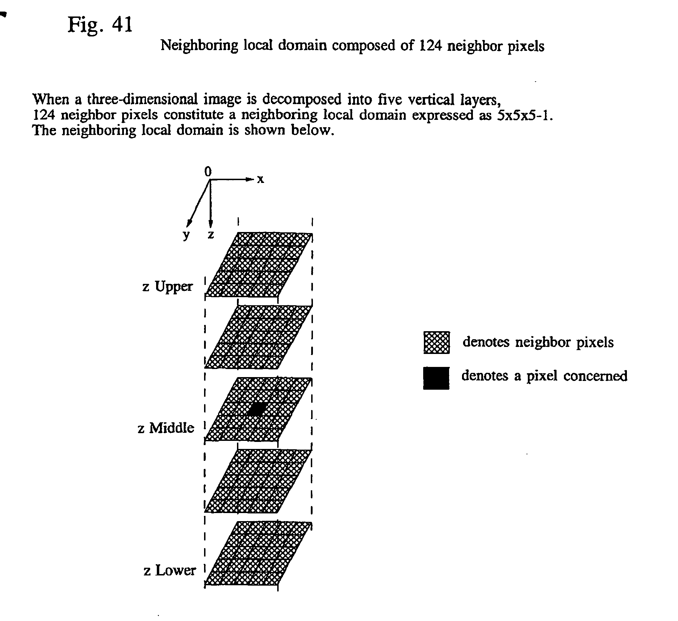

Fig. 40 shows a three-dimensional spatial filter neighboring local domain composed of twenty-six neighbor pixels, and Fig. 41 shows a three-dimensional spatial filter neighboring local domain composed of one hundred and twenty-four neighbor pixels.

[Non-patent Document 1] Applied Image Processing Technology (written by Hiroshi Tanaka, published from Industrial Research Committees, pp.59-60)

[Patent Document 1] Japanese Unexamined Patent Application Publication No. 01-88689

[Patent Document 2] Japanese Unexamined Patent Application Publication No. 2003-141548

[Patent Document 3] Japanese Unexamined Patent Application Publication No. 01-222383

Conventional labeling is designed for a two-dimensional image or a three-dimensional image but not intended to be adapted to time-sequential three-dimensional images, that is, a four-dimensional image or an image produced based on four or more dimensions.

Likewise, conventional filtering is not intended to be adapted to a four-dimensional image or an image produced based on four or more dimensions.

Therefore, the present invention seeks to provide four-dimensional labeling apparatus and N-dimensional labeling apparatus that efficiently and readily performs four-dimensional or N-dimensional labeling on a four-dimensional image or an N-dimensional image produced based on four or more dimensions.

The present invention also seeks to provide four-dimensional spatial filter apparatus and N-dimensional spatial filter apparatus that contribute to a reduction in an arithmetic operation time and can flexibly cope with a change in the number of dimensions, a filter size, or an image size to be handled during four-dimensional spatial filtering or N-dimensional spatial filtering.

The present invention further seeks to provide four-dimensional labeling apparatus and N-dimensional labeling apparatus that effectively perform four-dimensional labeling or N-dimensional labeling by combining four-dimensional spatial filtering or N-dimensional spatial filtering with four-dimensional labeling or N-dimensional labeling.

According to the first aspect, the present invention provides four-dimensional labeling apparatus that labels a four-dimensional image composed of time-sequentially juxtaposed three-dimensional, images, or a four-dimensional image produced with four parameters as a base. The four-dimensional labeling apparatus comprises a four-dimensional labeling means for, when a four-dimensional domain is four-dimensionally scanned, determining the label number of a pixel concerned on the basis of label numbers assigned to pixels contained in a four-dimensional neighbor domain.

In the four-dimensional labeling apparatus according to the first aspect, when the four-dimensional domain is four-dimensionally scanned (scanned sequentially along axes indicating four dimensions), continuity centered on a pixel concerned that is being scanned is checked in a three-dimensional space having x, y, and z axes. Moreover, continuity is checked in a four-dimensional space having a time axis t as well as the x, y, and z axes. The same number or name is assigned as a label to continuous four-dimensional domains. Thus, four-dimensional labeling is accomplished.

According to the second aspect, the present invention provides N-dimensional labeling apparatus that labels an N-dimensional image composed of N-1-dimensional images juxtaposed time-sequentially or an N-dimensional image produced with N (N≥4) parameters as a base. The N-dimensional labeling apparatus comprises an N-dimensional labeling means for, when an N-dimensional domain is N-dimensionally scanned, determining the label number of a pixel concerned on the basis of label numbers assigned to pixels contained in an N-dimensional neighbor domain.

In the N-dimensional labeling apparatus according to the second aspect, continuity in an N-dimensional image produced with N independent parameters, that is, four or more independent parameters as a base is checked in an N-dimensional space, and the same number or name is assigned as a label to continuous domains. Thus, N-dimensional labeling is accomplished.

According to the third aspect, the present invention provides four-dimensional spatial filter apparatus that four-dimensionally spatially filters a four-dimensional image composed of time-sequentially juxtaposed three-dimensional images or a four-dimensional image produced with four parameters as a base. The four-dimensional spatial filter apparatus comprises a four-dimensional spatial filter means for, when a four-dimensional image is four-dimensionally scanned, processing the four-dimensional image according to values of pixels contained in a neighboring local domain of each pixel concerned and the value of the pixel concerned, or convoluting a four-dimensional spatial filter to the four-dimensional image.

In the four-dimensional spatial filter apparatus according to the third aspect, when a four-dimensional domain is four-dimensionally scanned, a neighboring local domain centered on a pixel concerned that is being scanned is checked in a three-dimensional space having x, y, and z axes. At the same time, the neighboring local domain is checked in a four-dimensional space having a time axis t as well as the x, y, and z axes. The value of the pixel concerned is converted based on the value of the pixel concerned and the values of pixels contained in the neighboring local domain. Otherwise, a four-dimensional spatial filter is convoluted to the four-dimensional image. Thus, four-dimensional spatial filtering is accomplished.

According to the fourth aspect, the present invention provides N-dimensional spatial filter apparatus that N-dimensionally spatially filters an N-dimensional image composed of time-sequentially juxtaposed N-1-dimensional images or an N-dimensional image produced with N parameters as a base. The N-dimensional spatial filter apparatus comprises an N-dimensional spatial filter means for, when an N-dimensional image is N-dimensionally scanned, processing the N-dimensional image according to values of pixels contained in a neighboring local domain of each pixel concerned and the value of the pixel concerned, or convoluting an N-dimensional spatial filter to the N-dimensional image.

In the N-dimensional spatial filter apparatus according to the fourth aspect, a neighboring local domain in an N-dimensional image produced with N independent parameters, that is, four or more independent parameters as a base is checked in an N-dimensional space. The value of a pixel concerned is converted based on the value of the pixel concerned and the values of pixels contained in the neighboring local domain. Otherwise, an N-dimensional spatial filter is convoluted to the N-dimensional image. Thus, N-dimensional spatial filtering is accomplished.

According to the fifth aspect, the present invention provides four-dimensional spatial filter apparatus that is identical to the four-dimensional spatial filter apparatus according to the third aspect and that further comprises a processing means capable of performing noise alleviation, contrast enhancement, smoothing, contour enhancement, de-convolution, maximum value filtering, intermediate value filtering, and minimum value filtering.

In the four-dimensional filter apparatus according to the fifth aspect, various kinds of processing including noise alleviation and contrast enhancement can be performed by varying coefficients of filtering.

According to the sixth aspect, the present invention provides N-dimensional spatial filter apparatus that is identical to the N-dimensional spatial filter apparatus according to the fourth aspect and that further comprises a processing means capable of performing noise alleviation, contrast enhancement, smoothing, contour enhancement, de-convolution, maximum value filtering, intermediate value filtering, and minimum value filtering.

In the N-dimensional filter apparatus according to the sixth aspect, various kinds of processing including noise alleviation and contrast enhancement can be performed by varying coefficients of filtering.

According to the seventh aspect, the present invention provides four-dimensional labeling apparatus that labels a four-dimensional image composed of time-sequentially juxtaposed three-dimensional images. The four-dimensional labeling apparatus comprises: an image input means for receiving the time-sequentially juxtaposed three-dimensional images; an image filter means for applying a three-dimensional image filter to a four-dimensional image composed of the time-sequentially received three-dimensional images or applying a four-dimensional image filter thereto; an image binary-coding means for binary-coding the filtered image; and a four-dimensional labeling means for, when the binary-coded four-dimensional domain is four-dimensionally scanned, determining the label number of a pixel concerned on the basis of label numbers assigned to pixels contained in a four-dimensional neighbor domain.

In the four-dimensional labeling apparatus according to the seventh aspect, a four-dimensional image is received. A three-dimensional image filter is time-sequentially applied to the four-dimensional image or a four-dimensional image filter is applied to the four-dimensional image in order to improve the image quality of the four-dimensional image up to a desired level. The four-dimensional image is then binary-coded and four-dimensionally labeled. Therefore, four-dimensional labeling is accomplished with high precision.

According to the eighth aspect, the present invention provides four-dimensional labeling apparatus that is identical to the four-dimensional labeling apparatus according to the seventh aspect and that further comprises a four-dimensional image filter means for applying a four-dimensional image filter for the purpose of noise removal or improvement of a signal-to-noise ratio.

In the four-dimensional labeling apparatus according to the eighth aspect, the four-dimensional image filter is applied in order to remove noise or improve a signal-to-noise ratio. Therefore, even an image suffering a low signal-to-noise ratio can be four-dimensionally labeled with high precision.

According to the ninth aspect, the present invention provides four-dimensional labeling apparatus that is identical to the four-dimensional labeling apparatus according to the seventh aspect and that further comprises a four-dimensional image filter means for applying a four-dimensional image filter for the purpose of contrast enhancement.

In the four-dimensional labeling apparatus according to the ninth aspect, the four-dimensional image filter is used to enhance a contrast. Therefore, even a four-dimensional image suffering a low contrast can be four-dimensionally labeled with high precision.

According to the tenth aspect, the present invention provides N-dimensional labeling apparatus that labels an N-dimensional image produced with N ($N \geq 4$) parameters as a base. The N-dimensional labeling apparatus comprises: an image input means for receiving N-1-dimensional images juxtaposed time-sequentially; an N-dimensional image filter means for applying an N-dimensional image filter to an N-dimensional image composed of the time-sequentially received N-1-dimensional images; an image binary-coding means for binary-coding the image to which the N-dimensional image filter is applied; and an N-dimensional labeling means for, when the binary-coded N-dimensional domain is N-dimensionally scanned, determining the label number of a pixel concerned on the basis of label numbers assigned to pixels contained in an N-dimensional neighbor domain.

In the N-dimensional labeling apparatus according to the tenth aspect, an N-dimensional image is received, and an N-dimensional image filter is applied to the N-dimensional image in order to improve the image quality of the N-dimensional image up to a desired level. The N-dimensional image is then binary-coded and N-dimensionally labeled. Therefore, N-dimensional labeling is achieved with high precision.

According to the eleventh aspect, the present invention provides N-dimensional labeling apparatus that is identical to the N-dimensional labeling apparatus according to the tenth aspect and that further comprises an N-dimensional image filter means for applying an N-dimensional image filter for the purpose of noise removal or improvement of a signal-to-noise ratio.

In the N-dimensional labeling apparatus according to the eleventh aspect, the N-dimensional image filter is applied in order to remove noise or improve a signal-to-noise ratio. Therefore, even an image suffering a low signal-to-noise ratio can be N-dimensionally labeled with high precision.

According to the twelfth aspect, the present invention provides N-dimensional labeling apparatus that is identical to the N-dimensional labeling apparatus according to the tenth aspect and that further an N-dimensional image filter means for applying an N-dimensional filter for the purpose of contrast enhancement.

In the N-dimensional labeling apparatus according to the twelfth aspect, the N-dimensional image filter is applied in order to enhance a contrast. Therefore, even an N-dimensional image suffering a low contrast can be N-dimensionally labeled with high precision.

According to the thirteenth aspect, the present invention provides four-dimensional labeling apparatus that is identical to the four-dimensional labeling apparatus according to any of the first, and seventh to ninth aspects and that further comprises a four-dimensional labeling means for determining the label number of a pixel concerned, which is four-dimensionally scanned, on the basis of label numbers assigned to pixels contained in a neighbor mask that is a four-dimensional neighbor domain.

In the four-dimensional labeling apparatus according to the thirteenth aspect, the label number of a pixel concerned being four-dimensionally scanned can be efficiently determined by checking the label numbers assigned to the pixels contained in the neighbor mask that is the four-dimensional neighbor domain.

According to the fourteenth aspect, the present invention provides N-dimensional labeling apparatus that is identical to the N-dimensional labeling apparatus according to any of the second, and tenth to twelfth aspects and that further comprises an N-dimensional labeling means for determining the label number of a pixel concerned, which is N-dimensionally scanned, on the basis of label numbers assigned to pixels contained in a neighbor mask that is an N-dimensional neighbor domain.

In the N-dimensional labeling apparatus according to the fourteenth aspect, the label number of a pixel concerned that is being N-dimensionally scanned is efficiently determined by checking the label numbers assigned to the pixels contained in the neighbor mask that is the N-dimensional neighbor domain.

According to the fifteenth aspect, the present invention provides four-dimensional labeling apparatus that is identical to the four-dimensional labeling apparatus according to the thirteenth aspect and that further comprises a renumbering means for, when a plurality of continuous domains is found concatenated, reassigning a label number so as to unify the label numbers of the continuous domains.

In the four-dimensional labeling apparatus according to the fifteenth aspect, the renumbering means unifies different label numbers of domains, which are contained in a Y-shaped continuous domain and concatenated at a bifurcation, into one label number.

According to the sixteenth aspect, the present invention provides N-dimensional labeling apparatus that is identical to the N-dimensional labeling apparatus according to the fourteenth aspect and that further comprises a renumbering means for, which a plurality of continuous domains is found concatenated, reassigning a label number to unify the label numbers of the continuous domains. In the N-dimensional labeling apparatus according to the sixteenth aspect, the renumbering means unifies the different label numbers of domains, which are contained in a Y-shaped continuous domain and concatenated at a bifurcation, into one label number.

According to the four-dimensional labeling apparatus or N-dimensional labeling apparatus of the present invention, a four-dimensional image composed of time-varying three-dimensional images or an N-dimensional image produced with N ($\geq$4) independent parameters as a base is four-dimensionally or N-dimensionally labeled. Thus, a four-dimensional continuous domain or an N-dimensional continuous domain can be sampled.

According to the four-dimensional spatial filter apparatus or N-dimensional spatial filter apparatus of the present invention, the image quality of a four-dimensional image composed of time-varying three-dimensional images or an N-dimensional image produced with N ($\geq$4) independent parameters as a base can be improved to a desired level by converting a pixel value according to the value of a pixel concerned that is four-dimensionally or N-dimensionally scanned, and the values of pixels contained in a neighboring local domain.

Furthermore, according to the four-dimensional labeling apparatus or N-dimensional labeling apparatus of the present invention, a four-dimensional spatial filter or N-dimensional spatial filter is used to achieve four-dimensional labeling or N-dimensional labeling with high precision.

The four-dimensional labeling apparatus, N-dimensional labeling apparatus, four-dimensional spatial filter apparatus, and N-dimensional spatial filter apparatus in accordance with the present invention can be used to handle time-sequential three-dimensional images produced by an X-ray CT system.

The invention will now be described in greater detail, by way of example, with reference to the drawings, in which:-

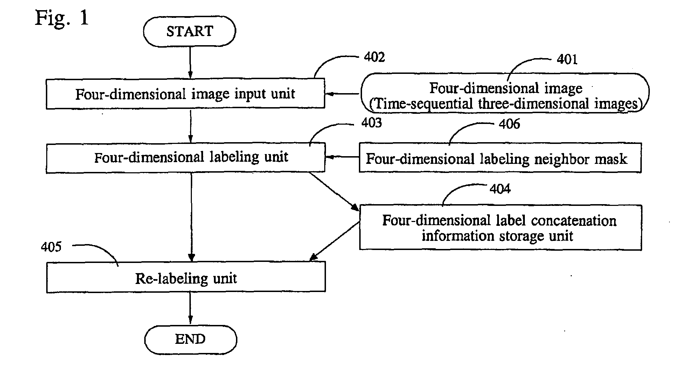

Fig. 1 shows the functional configuration of four-dimensional labeling apparatus in accordance with the first embodiment.

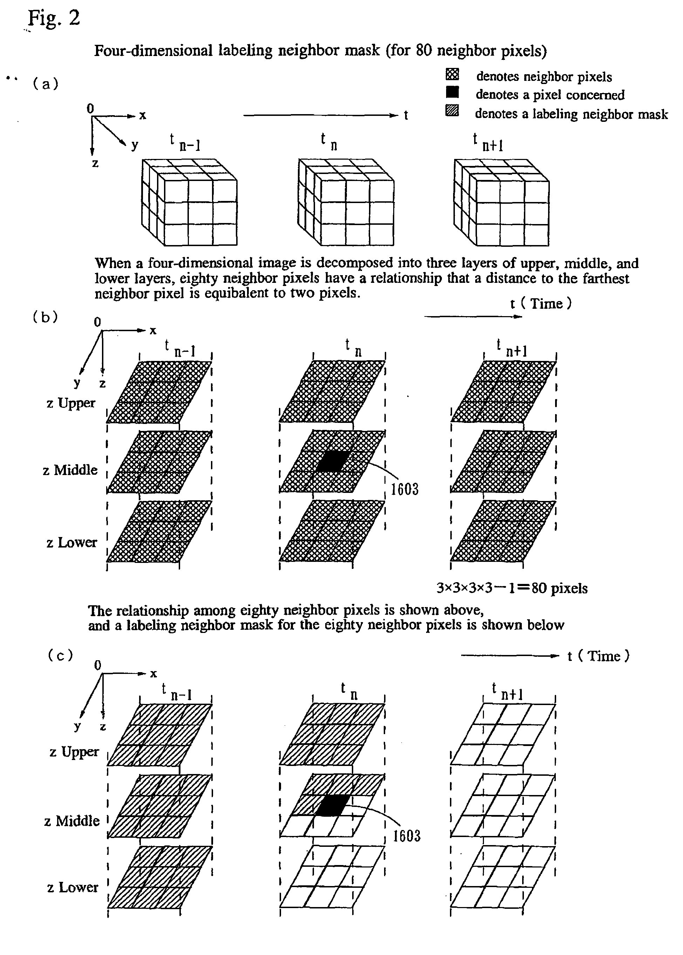

Fig. 2 shows a four-dimensional labeling neighbor mask for eighty neighbor pixels.

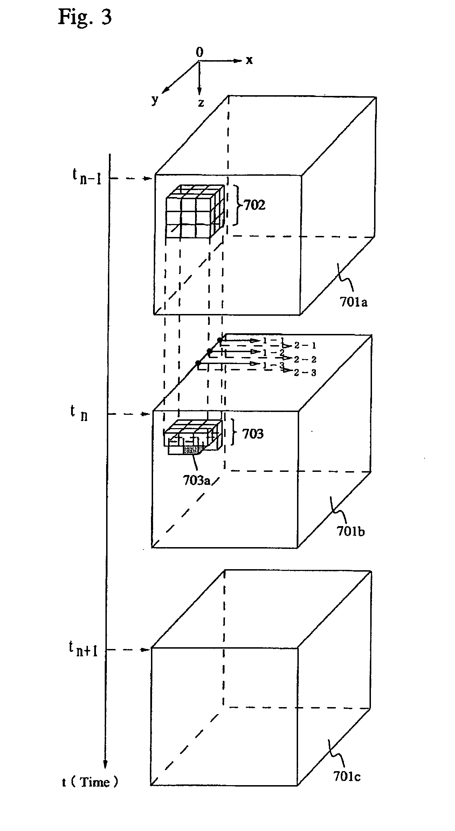

Fig. 3 shows a four-dimensional image to be four-dimensionally labeled and a four-dimensional labeling neighbor mask;

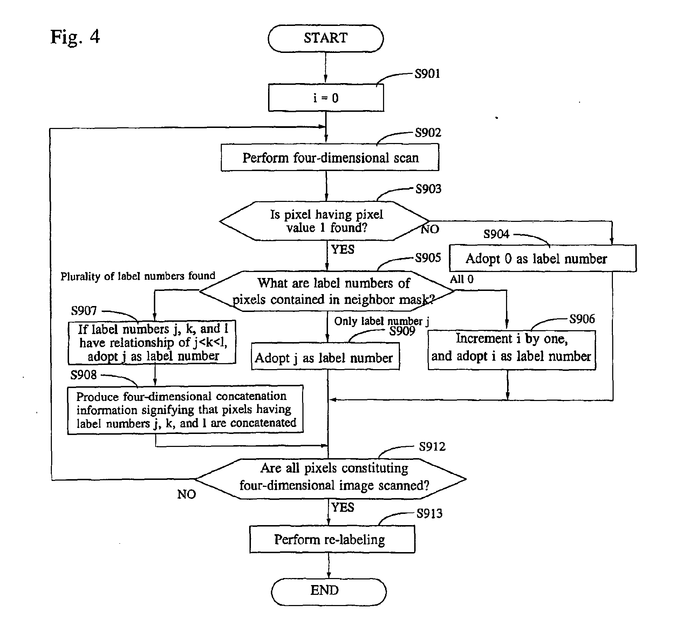

Fig. 4 is a flowchart describing four-dimensional labeling in accordance with the first embodiment.

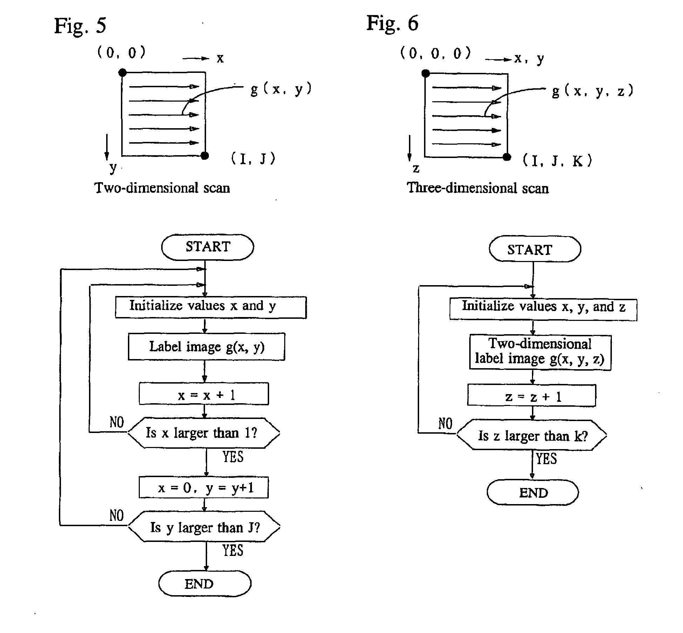

Fig. 5 is a flowchart describing two-dimensional labeling scan.

Fig. 6 is a flowchart describing three-dimensional labeling scan.

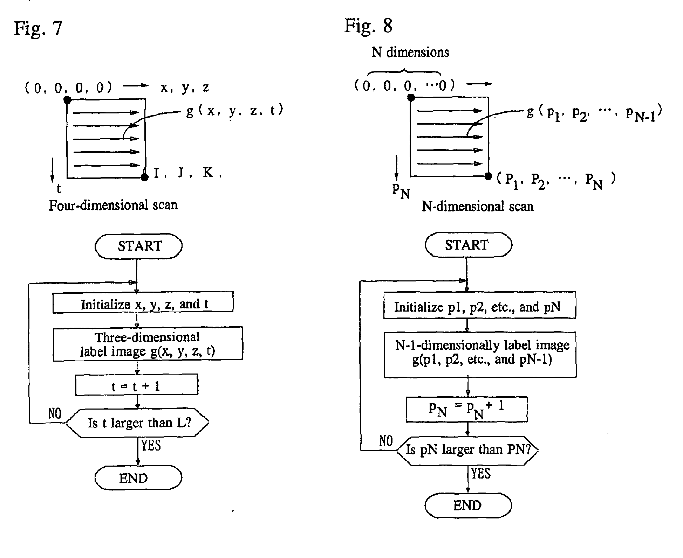

Fig. 7 is a flowchart describing four-dimensional labeling scan.

Fig. 8 is a flowchart describing N-dimensional labeling scan.

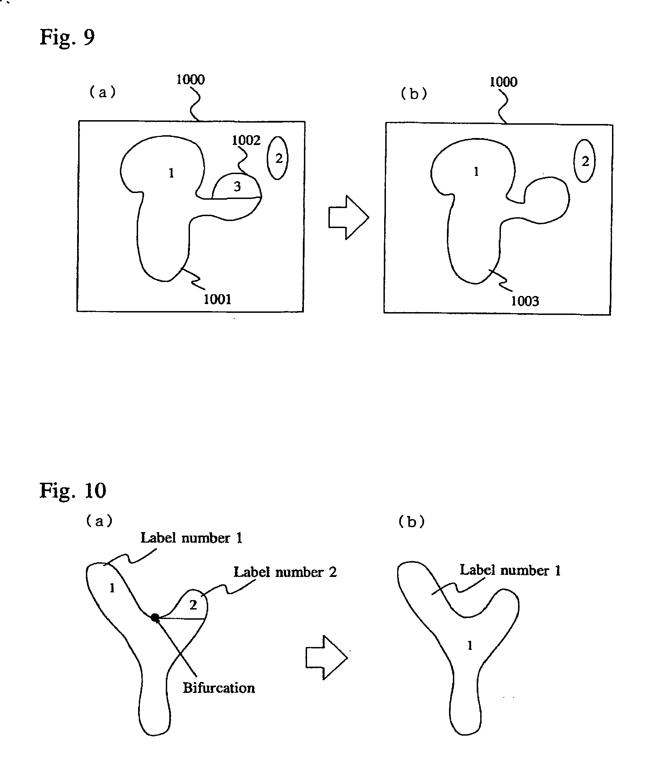

Fig. 9 is an explanatory diagram concerning concatenation of image domains based on concatenation information, and re-labeling.

Fig. 10 shows re-labeling for a Y-shaped continuous domain.

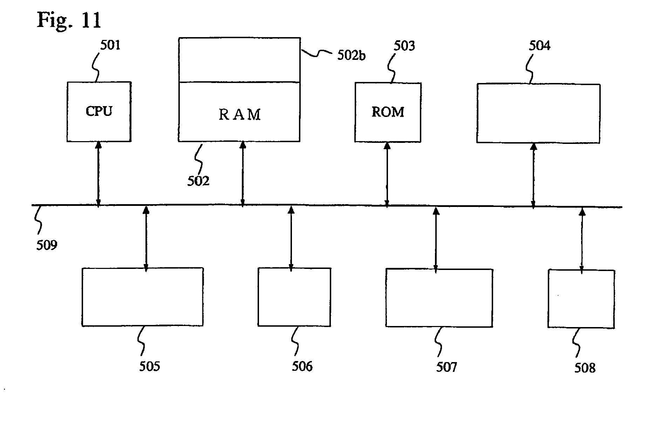

Fig. 11 shows the fundamental configuration of the four-dimensional labeling apparatus in accordance with the first embodiment.

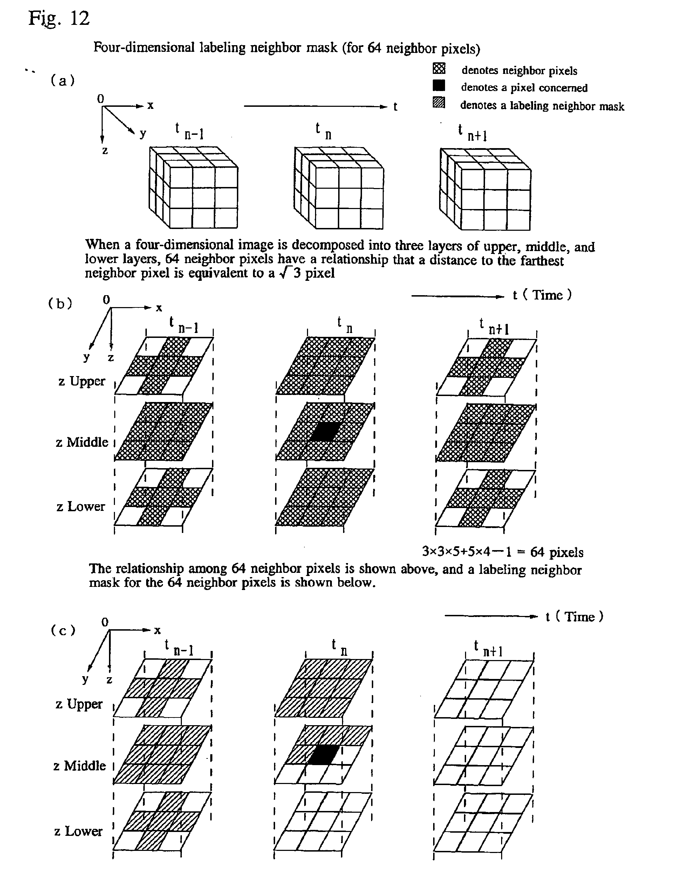

Fig. 12 shows a four-dimensional labeling neighbor mask for sixty-four neighbor pixels.

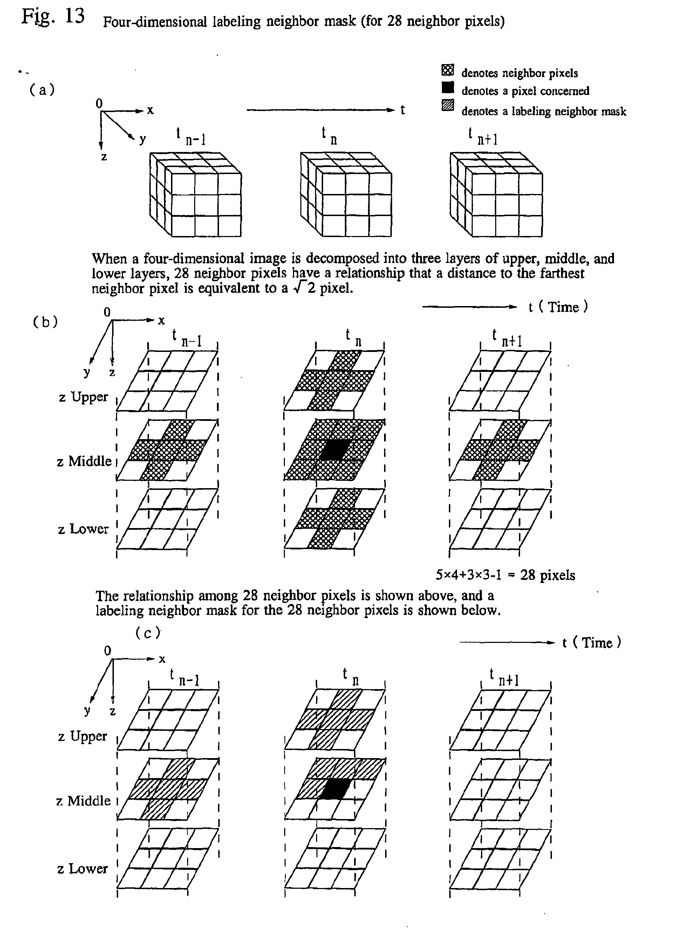

Fig. 13 shows a four-dimensional labeling neighbor mask for 28 neighbor pixels.

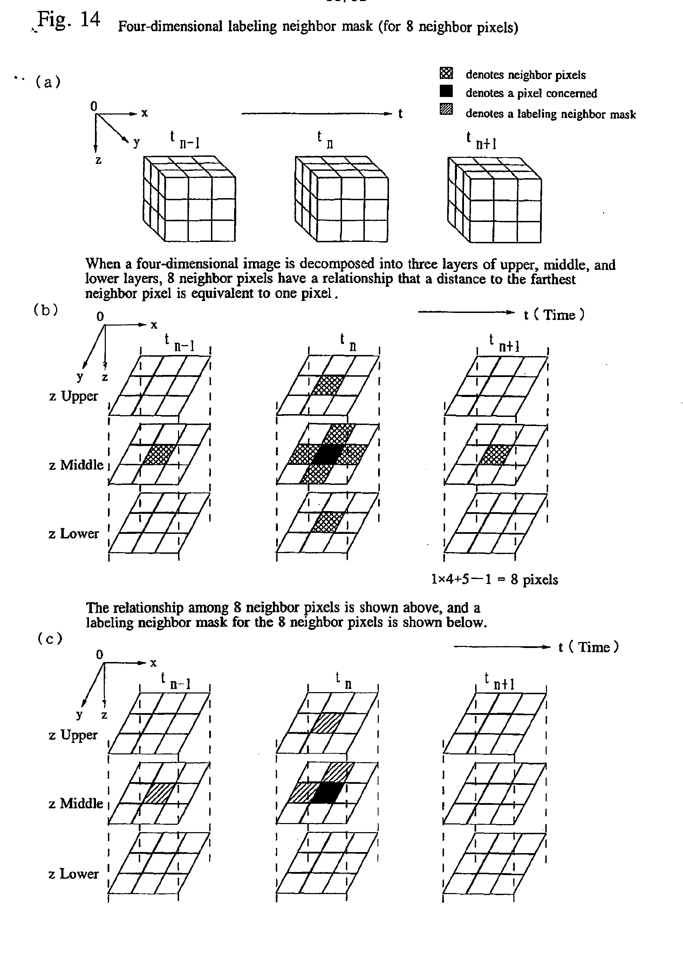

Fig. 14 shows a four-dimensional labeling neighbor mask for eight neighbor pixels.

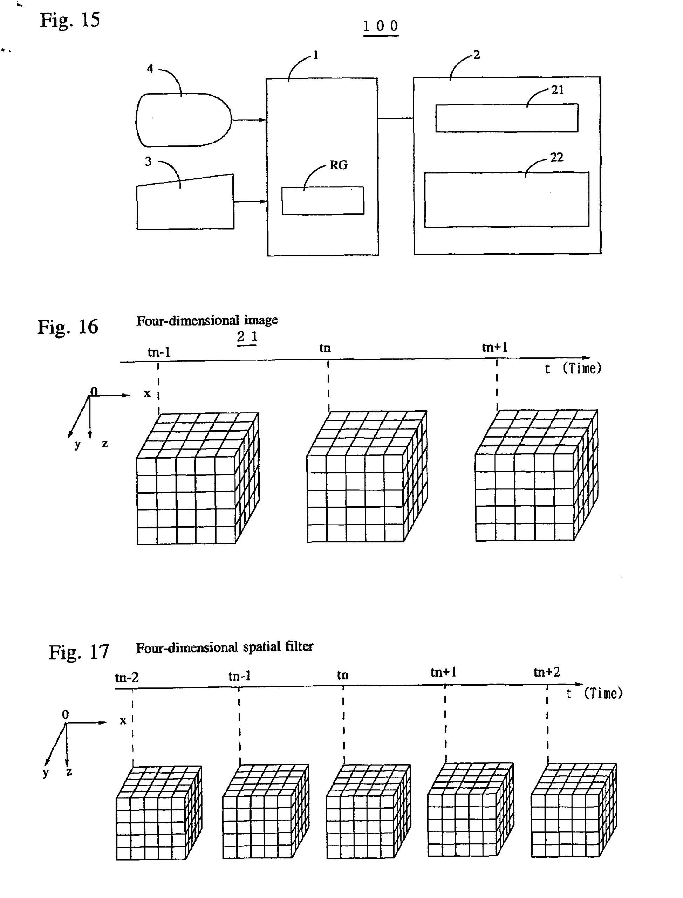

Fig. 15 is a block diagram showing four-dimensional spatial filter apparatus in accordance with the fifth embodiment.

Fig. 16 is a conceptual diagram of a four-dimensional image.

Fig. 17 is a conceptual diagram of a four-dimensional spatial filter.

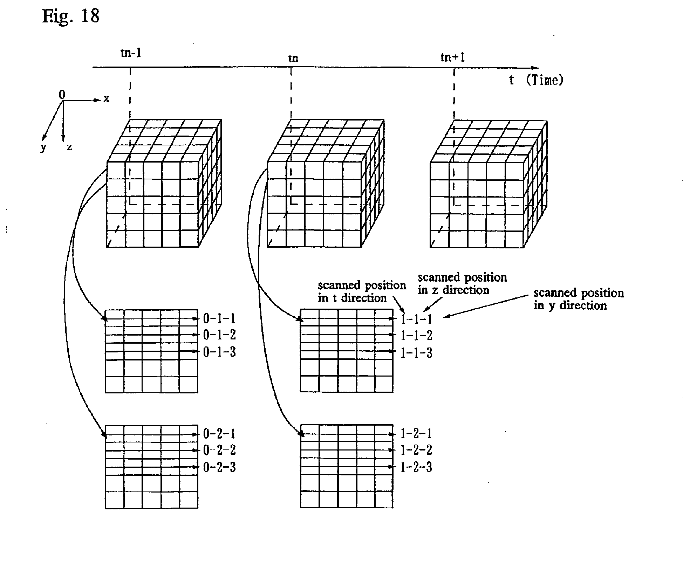

Fig. 18 is an explanatory diagram concerning four-dimensional scan of the four-dimensional spatial filter included in the fifth embodiment.

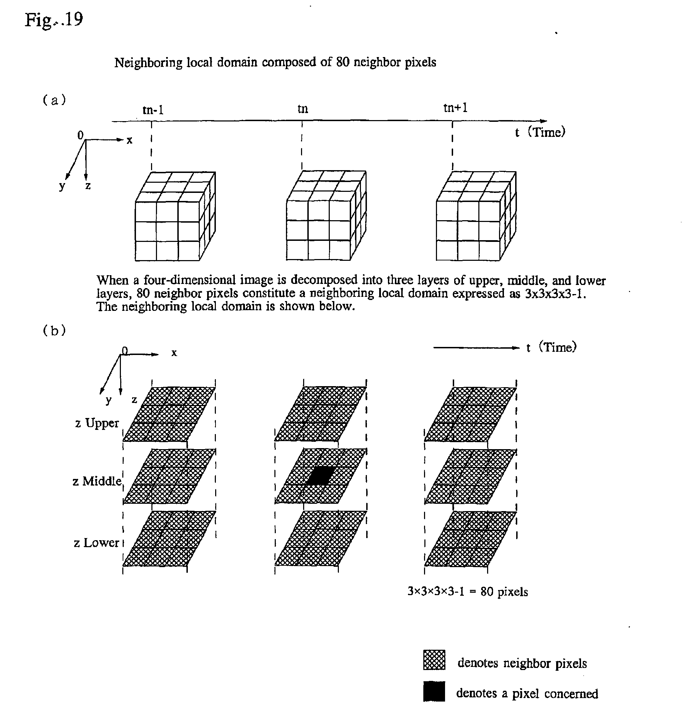

Fig. 19 is an explanatory diagram showing a four-dimensional spatial filter local domain composed of eighty neighbor pixels.

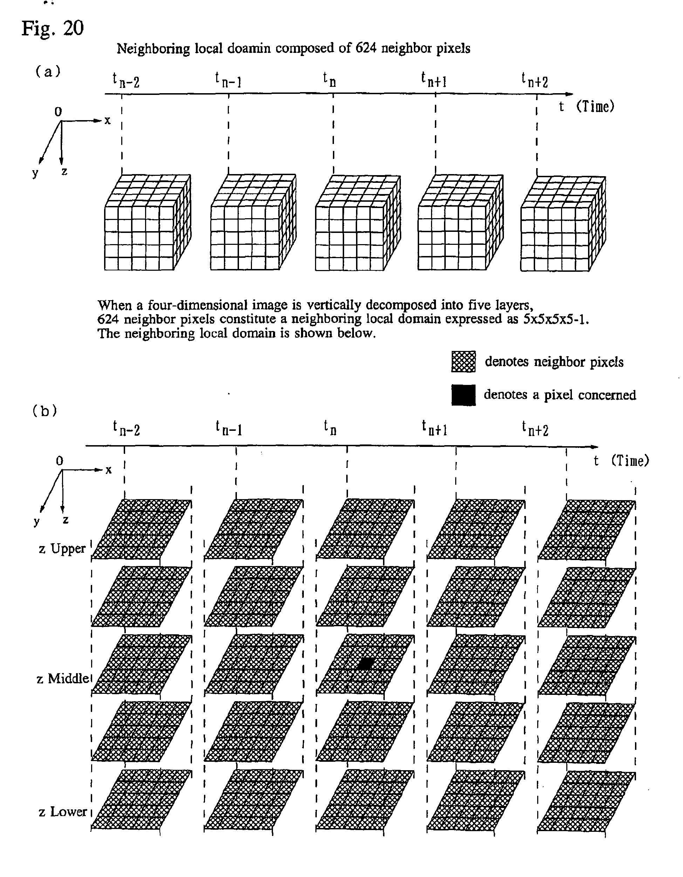

Fig. 20 is an explanatory diagram showing a four-dimensional spatial filter local domain composed of six hundred and twenty-four neighbor pixels.

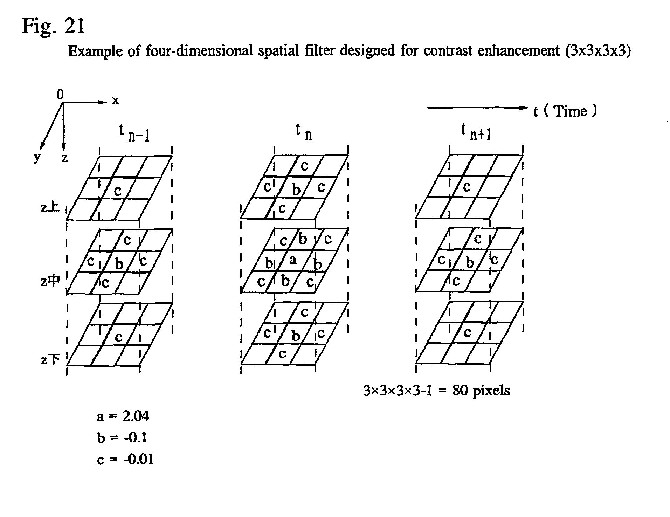

Fig. 21 is an explanatory diagram showing a four-dimensional spatial filter of 3 by 3 by 3 by 3 in size for contrast enhancement.

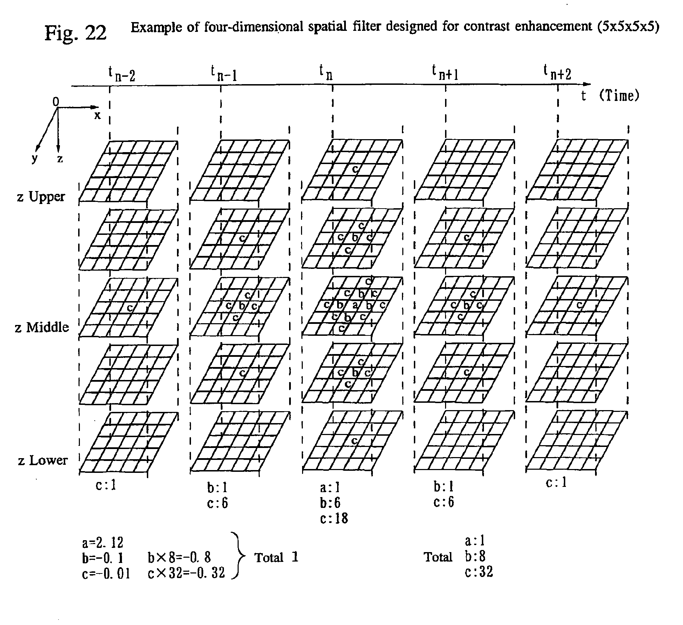

Fig. 22 is an explanatory diagram showing a four-dimensional spatial filter of 5 by 5 by 5 by 5 in size for contrast enhancement.

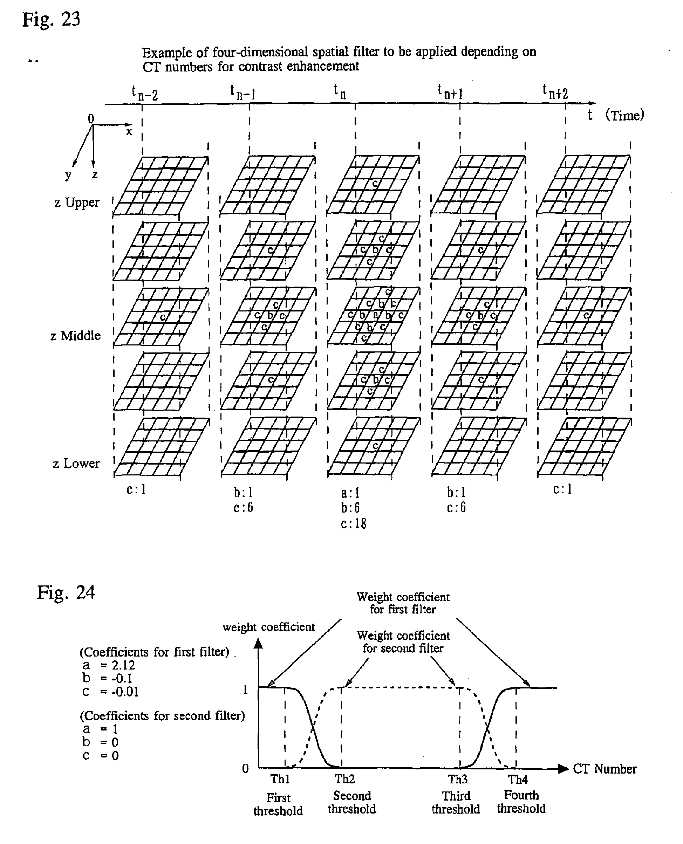

Fig. 23 is an explanatory diagram showing a four-dimensional spatial filter that is applied depending on CT numbers for contrast enhancement.

Fig. 24 is an explanatory diagram concerning weight coefficients employed in a four-dimensional spatial filter that is applied depending on CT numbers for contrast enhancement.

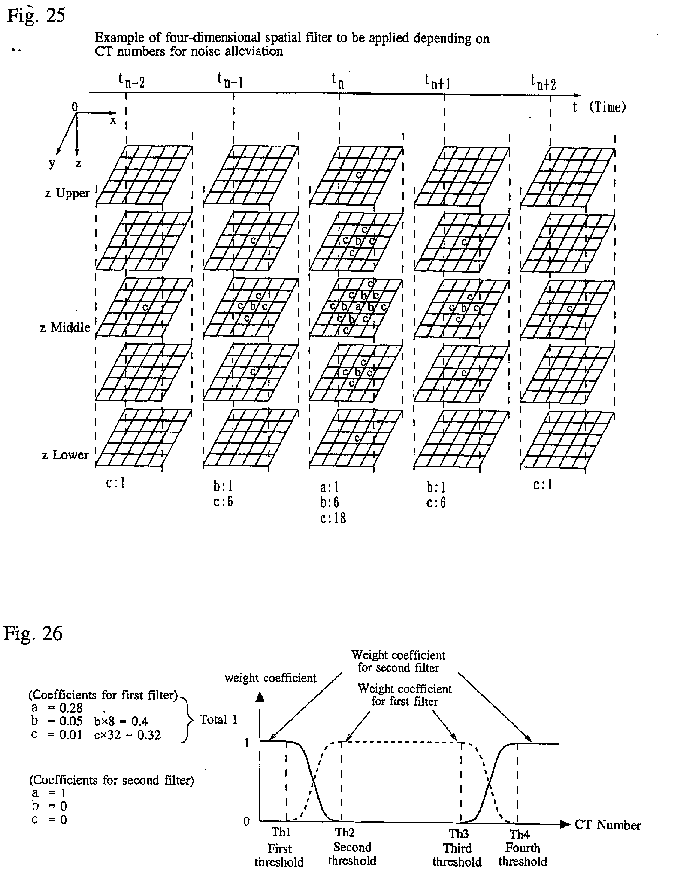

Fig. 25 is an explanatory diagram concerning a four-dimensional spatial filter that is applied depending on CT numbers for noise alleviation.

Fig. 26 is an explanatory diagram concerning weight coefficients employed in a four-dimensional spatial filter that is applied depending on CT numbers for noise alleviation.

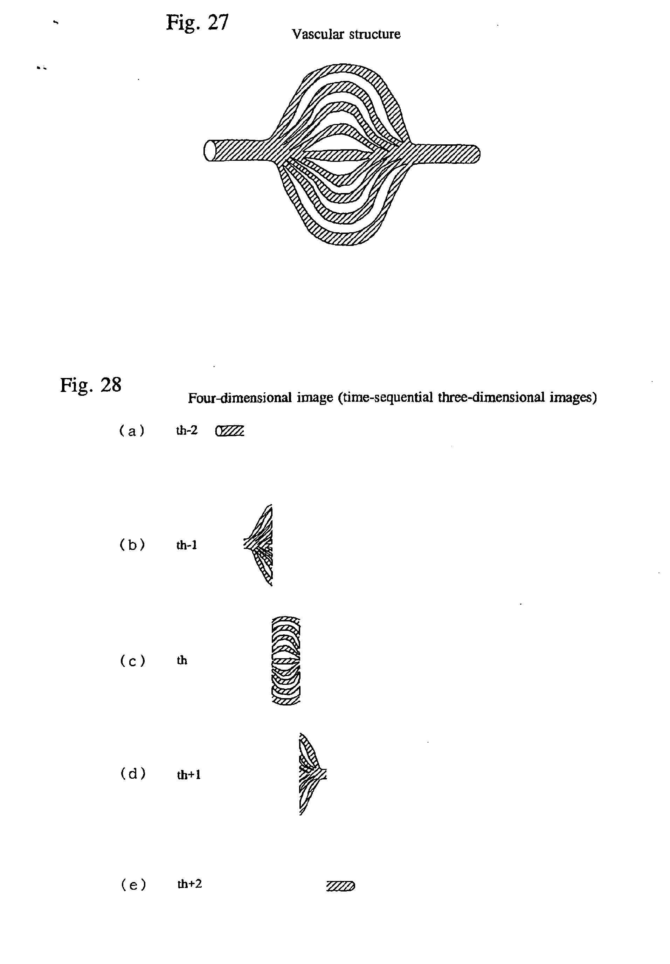

Fig. 27 illustrates a vascular structure.

Fig. 28 shows a four-dimensional image of a blood vessel into which a small amount of contrast medium is injected.

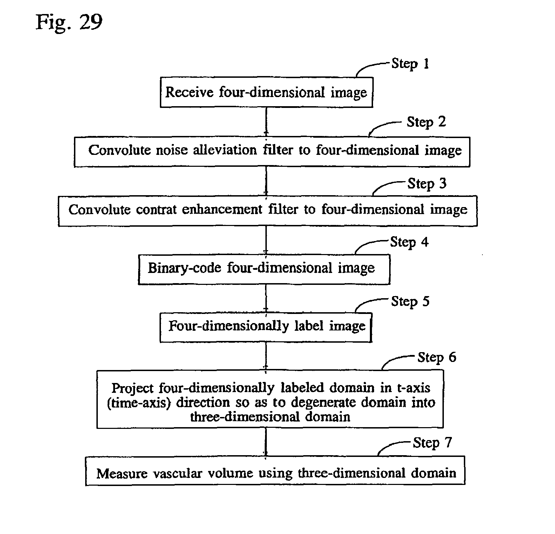

Fig. 29 is a flowchart describing vascular volume measurement in accordance with the ninth embodiment.

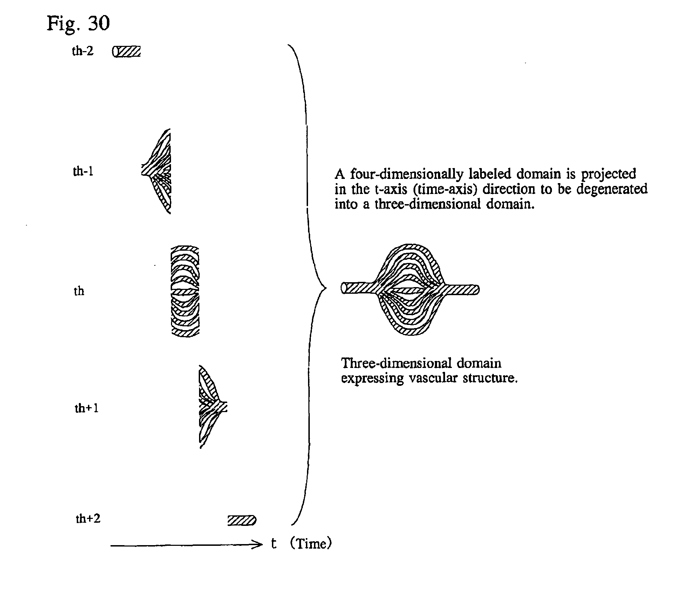

Fig. 30 shows a vascular structure constructed by projecting a four-dimensionally labeled domain in a time-axis (t-axis) direction and then degenerating it into a three-dimensional domain.

Fig. 31 outlines conventional two-dimensional labeling.

Fig. 32 illustrates an image for explanation of the conventional two-dimensional labeling.

Fig. 33 shows a conventional two-dimensional labeling neighbor mask.

Fig. 34 shows a three-dimensional image and two-dimensional images constituting the three-dimensional image.

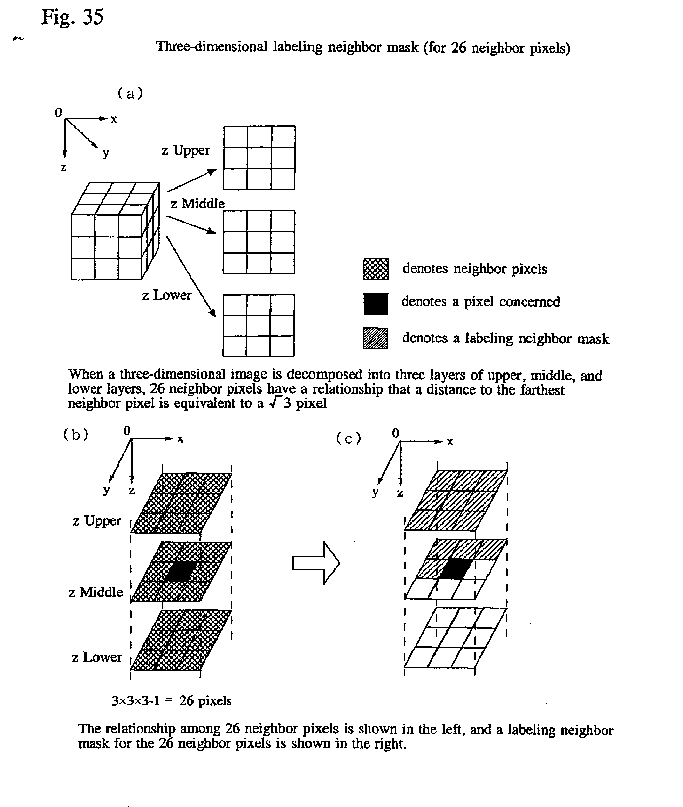

Fig. 35 shows a conventional three-dimensional labeling neighbor mask for twenty-six neighbor pixels.

Fig. 36 shows a three-dimensional image to be three-dimensionally labeled, and a three-dimensional labeling neighbor mask.

Fig. 37 shows a conventional three-dimensional labeling neighbor mask for eighteen neighbor pixels.

Fig. 38 shows a conventional three-dimensional labeling neighbor mask for six neighbor pixels.

Fig. 39 is an explanatory diagram showing a conventional two-dimensional spatial filter local domain.

Fig. 40 is an explanatory diagram showing a conventional three-dimensional spatial filter local domain composed of twenty-six neighbor pixels.

Fig. 41 is an explanatory diagram showing a conventional three-dimensional spatial filter local domain composed of one hundred and twenty-four neighbor pixels.

The present invention will be described below in conjunction with embodiments shown in drawings. Noted is that the present invention will not be restricted to the embodiments.

[First Embodiment]

Fig. 1 shows the functional configuration of four-dimensional labeling apparatus in accordance with the first embodiment. The first embodiment is described by taking a four-dimensional image for instance. The same applies to an N(≥4)-dimensional image.

A four-dimensional image input unit 402 transfers a four-dimensional image 401 to a four-dimensional labeling unit 403. The four-dimensional image 401 is composed of three-dimensional images produced time-sequentially one after another by performing, for example, multi-array X-ray detector CT or area sensor X-ray CT (flat panel X-ray CT or X-ray CT using an image intensifier) which has prevailed in recent years, or realized with a three-dimensional image having two-dimensional images stacked on one after another.

The four-dimensional labeling unit 403 four-dimensionally scans a four-dimensional image using a four-dimensional labeling neighbor mask 406, selects a pixel from among neighbor pixels of each pixel concerned, determines the label number of the pixel concerned, and produces four-dimensional labeling information in units of each of time-sequential three-dimensional images. Moreover, the four-dimensional labeling unit 403 produces four-dimensional label concatenation information that is information on concatenation of continuous domains, and stores the four-dimensional label concatenation information in a four-dimensional label concatenation information storage unit 404.

A re-labeling unit 405 uses the four-dimensional label concatenation information stored in the four-dimensional label concatenation information storage unit 404 to re-label the four-dimensional image.

Fig. 2(a) and Fig. 2(b) show 80 neighbor pixels.

The eighty neighbor pixels include three layers of pixels juxtaposed along a t axis with a pixel concerned 1603 as a center, three layers of pixels juxtaposed along a z axis with the pixel concerned 1603 as a center, and three pixels juxtaposed along both x and y axes, and are expressed as $3^4-1=80$ (1 is the pixel concerned).

Fig. 2(c) shows a four-dimensional labeling neighbor mask for eighty neighbor pixels.

The four-dimensional labeling neighbor mask for eighty neighbor pixels is produced using pixels constituting three-dimensional images produced at time instants immediately preceding time instants when three-dimensional images containing the pixels that constitute three-dimensional labeling neighbor masks and the pixel concerned 1603 are produced.

Fig. 3 shows three-dimensional images 701 a, 701 b, and 701 c constituting a four-dimensional image, and three-dimensional labeling neighbor masks 702 and 703 constituting a four-dimensional labeling neighbor mask.

The pixel concerned and four-dimensional neighbor mask are scanned sequentially along x, y, z, and t axes from a small coordinate to a large coordinate, thus scanned in units of one dimension, and finally scanned four-dimensionally. Specifically, a three-dimensional image produced at time instant t=0 is scanned one-dimensionally in the x-axis direction from a pixel located at (0,0,0). After the one-dimensional scan is performed to finally scan the pixel at the end of a line extending in the x-axis direction, lines are changed in the y-axis direction. The one-dimensional scan is repeated along the next line started with a pixel identified with an x-coordinate 0. Thus, two-dimensional scan is performed to finally scan the pixel located at the ends in the y-axis and x-axis directions respectively. Thereafter, planes are changed in the z-axis direction, and the two-dimensional scan is repeated over a plane located immediately below. Thus, three-dimensional scan is performed to finally scan the pixel located at the ends in the z-axis, y-axis, and x-axis directions respectively. Thereafter, three-dimensional images are changed in the t-axis direction, and the three-dimensional scan is repeated in an immediately succeeding three-dimensional image. Noted is that the position of an initially scanned pixel and the direction of scan is not limited to the foregoing ones.

The label number of a pixel concerned having a pixel value 1 and being found first is set to 1. Thereafter, when a pixel having the pixel value 1 is found, a label number assigned to a pixel contained in a four-dimensional labeling neighbor mask for neighbor pixels of the pixel concerned is referenced. If the four-dimensional labeling neighbor mask does not contain a pixel to which a label number is already assigned, a label number calculated by adding 1 to the largest value among all label numbers already assigned to pixels is adopted. If the four-dimensional labeling neighbor mask contains a pixel to which a label number is already assigned, as long as the number of label numbers is one, the label number is adopted as the label number of the pixel concerned. If the number of label numbers is two or more, the smallest number among all the label numbers is adopted as the label number of the pixel concerned. Moreover, concatenation information signifying that the pixels having the label numbers are concatenated is produced for the purpose of re-labeling (a way of stating concatenation information is not limited to any specific one). Based on the concatenation information, two or more label numbers are unified into one label number through the re-labeling.

As for the three-dimensional image produced at time instant t=0, a three-dimensional image immediately proceeding in the t-axis direction is unavailable. Therefore, any of the following pieces of processing is performed:

(1) in the three-dimensional image produced at time instant t=0, the label numbers of all pixels contained are set to 0;

(2) in the three-dimensional image produced at time instant t=0, original pixel values are adopted as they are but label numbers are not assigned; and

(3) processing similar to the one described below is performed on the assumption that a three-dimensional image whose pixels all have a pixel value 0 is found to precede in the time-axis direction the three-dimensional image produced at time instant t=0.

As shown in Fig. 3, a three-dimensional image 701 b produced at time instant t=tn is one-dimensionally scanned along a line 1-1 in the x-axis direction on an xy plane located at a z-coordinate 0. Thereafter, the line 1-1 is changed to a line 1-2 in the y-axis direction, and one-dimensional scan is performed. Likewise, the one-dimensional scan is performed along a line 1-3. After two-dimensional scan of the xy plane located at the z-coordinate 0 is completed by repeating the one-dimensional scan, the z-coordinate is advanced. The two-dimensional scan is performed on the planes 2-1, 2-2, 2-3, and so on. After three-dimensional scan of all pixels constituting the three-dimensional image 701 b produced at time instant t=tn is completed, the three-dimensional image 701 b is changed to a succeeding three-dimensional image 701 c produced at time instant t=tn+1. The three-dimensional scan is then performed in the same manner. During this four-dimensional scan, when a pixel concerned having a pixel value 1 is found, a label number is assigned to the pixel concerned as described previously.

Fig. 4 is a flowchart describing labeling.

At step S901, a variable i serving as a label number is initialized to 0.

At step S902, a four-dimensional image is four-dimensionally scanned to select a pixel concerned.

Four-dimensional scan comprises at a low-order level two-dimensional labeling scan shown in Fig. 5 and three-dimensional labeling scan shown in Fig. 6. Consequently, four-dimensional labeling scan shown in Fig. 7 is achieved. In general, as shown in Fig. 8, N-dimensional labeling scan comprises N-1-dimensional labeling scans.

At step S903, if the pixel value of a pixel concerned is 0, control is passed to step S904. If the pixel value is 1, control is passed to step S905.

At step S904, the label number of the pixel concerned is set to 0. Control is then passed to step S912.

At step S905, label numbers assigned to pixels contained in the four-dimensional labeling neighbor mask shown in Fig. 7 are checked. If the label numbers are all 0, control is passed to step S906. If the label numbers include a plurality of numerals, control is passed to step S907. If only one label number is found, control is passed to step S909.

At step S906, the variable 1 is incremented by 1 and adopted as the label number of the pixel concerned. For example, the label number of a pixel having a pixel value 1 and being found first is set to 1. Control is then passed to step S912.

At step S907, if the plurality of label numbers includes, for example, three label numbers of j, k, and I, the smallest one of the label numbers j, k, and I, that is, the label number j is adopted as the label number of the pixel concerned.

At step S908, label concatenation information signifying that the pixels having the label numbers j, k, and I are three-dimensionally concatenated is produced. Control is then passed to step S912.

At step S909, if one and only label number is, for example, the label number j, the label number j is adopted as the label number of the pixel concerned. Control is then passed to step S912.

At step S912, steps S902 to S909 are repeated until scanning all the pixels that constitute the four-dimensional image is completed. After scanning all the pixels that constitute the four-dimensional image is completed, control is passed to step S913.

At step S913, re-labeling is performed based on four-dimensional concatenation information. Specifically, continuous image domains contained in the four-dimensional image are renumbered based on the four-dimensional image information. The same label number is assigned to continuous image domains that are concatenated. The processing is then terminated.

Fig. 9 is an explanatory diagram concerning re-labeling. For convenience sake, Fig. 9 shows two-dimensional images. In practice, a four-dimensional image or an N(≥4)-dimensional image is handled.

As shown in Fig. 9(a), although domains 1001 and 1002 are included in the same image domain, different label numbers 1 and 3 are assigned to the domains 1001 and 1002 according to the order that they are scanned. However, the aforesaid concatenation information signifies that the domains 1001 and 1002 are included in the same image domain. In this case, the concatenation information is referenced and the same label number (for example, the smallest label number among the label numbers) is reassigned to the domains 1001 and 1002. Consequently, the domains 1001 and 1002 are handled as one domain 1003.

In general, as shown in Fig. 10, re-labeling is required for a Y-shaped domain.

Fig. 11 shows the fundamental configuration of four-dimensional labeling apparatus that performs four-dimensional labeling using the foregoing four-dimensional labeling neighbor mask.

Reference numeral 501 denotes a CPU that uses programs and data stored in a RAM 502 or a ROM 503 to control the whole of the apparatus or to implement control in four-dimensional labeling by running a program that is stated according to the flowchart of Fig. 4.

Reference numeral 502 denotes a RAM that has a storage area into which the program stated according to the flowchart of Fig. 4 and data are read from an external storage device 504 or a CD-ROM via a CD-ROM drive 505, and a storage area in which the aforesaid label concatenation information is temporarily stored. The RAM 502 also has a work area which the CPU 501 uses to execute processing. Moreover, the RAM 502 has a storage area 502a serving as the labeling information storage unit 406. The area 502b may be reserved in the external storage device 504.

Reference numeral 503 denotes a ROM in which programs for controlling the entire apparatus and data are stored. In addition, a bootstrap is stored in the ROM 503.

Reference numeral 504 denotes an external storage device such as a hard disk drive (HDD). A program and data which the CD-ROM drive 505 reads from the CD-ROM can be stored in the external storage device 504. Moreover, if the above areas included in the RAM 502 cannot be reserved in terms of the storage capacity of the RAM 502, the areas may be included in the external storage device 504 in the form of files.

Reference numeral 505 denotes a CD-ROM drive that reads the program stated according to the flowchart of Fig. 4, and data, from the CD-ROM, and that transfers the program and data to the RAM 502 or external storage device 504 over a bus 509. Aside from the CD-ROM drive 505, a drive may be included for reading a storage medium (flexible disk, DVD, or CD-R) other than the CD-ROM. In this case, needless to say, a program and data read by the drive are used in the same manner as the program and data read from the CD-ROM.

Reference numeral 506 denotes a display unit realized with a liquid crystal monitor or the like. A three-dimensional image and character information can be displayed on the display unit 506.

Reference numerals 507 and 508 denote a keyboard and a mouse respectively that are pointing devices to be used to enter various instructions that are transmitted to the apparatus.

Reference numeral 509 denotes a bus over which the foregoing components are interconnected.

For the four-dimensional labeling apparatus having the configuration shown in Fig. 10, for example, a general personal computer or workstation is suitable.

n the four-dimensional labeling apparatus and four-dimensional labeling method according to the first embodiment, four-dimensional labeling is accomplished perfectly by performing two pieces of processing, that is, labeling through four-dimensional scan and re-labeling. N($\geq$4)-dimensional labeling can be achieved in the same manner.

[Second Embodiment]

According to the first embodiment, a four-dimensional binary-coded image is transferred to the four-dimensional labeling apparatus. An input image is not limited to the four-dimensional binary-coded image.

For example, if the four-dimensional image is a four-dimensional shaded image that has shades, a binary-coding unit is included in a stage preceding the four-dimensional image input unit 402. Herein, the binary-coding unit converts the four-dimensional shaded image into a binary-coded image according to a method that pixel values falling below a predetermined threshold are set to 1s.

Otherwise, when the four-dimensional labeling unit 403 performs labeling, after pixel values are binary-coded, the labeling described in conjunction with the first embodiment may be performed.

[Third Embodiment]

A four-dimensional spatial filter for removing noise from an input image (smoothing filter, intermediate value filter, maximum value filter, minimum value filter, etc.) may be included in the stages preceding and succeeding the four-dimensional image input unit 402 for the purpose of noise removal.

[Fourth Embodiment]

As a four-dimensional labeling neighbor mask employed in four-dimensional labeling, a four-dimensional labeling neighbor mask for sixty-four neighbor pixels shown in Fig. 12 may be adopted.

Moreover, a four-dimensional labeling neighbor mask for twenty-eight neighbor pixels shown in Fig. 13 may be adopted.

A four-dimensional labeling neighbor mask for eight neighbor pixels shown in Fig. 14 may be adopted.

[Fifth Embodiment]

Fig. 15 is a block diagram of four-dimensional spatial filter apparatus 100 in accordance with the fifth embodiment.

The four-dimensional spatial filter apparatus 100 comprises a processor 1 that runs a four-dimensional spatial filter program 22, a storage device 2 in which a four-dimensional image 21 and the four-dimensional spatial filter program 22 are stored, a console 3 which an operator uses to enter data, and a monitor 4 on which messages or images are displayed.

The processor 1 includes a register RG that holds data.

Fig. 16 is a conceptual diagram of the four-dimensional image 21.

Fig. 17 is a conceptual diagram of a four-dimensional spatial filter.

The four-dimensional image 21 comprises three-dimensional images each having a three-dimensional matrix structure, that is, each having points of pixels juxtaposed in x, y, and z directions. The four-dimensional image 21 is constructed based on data acquired from a subject by, for example, a medical-purpose diagnostic imaging system (diagnostic ultrasound system, X-ray CT system, or MRI system). The three-dimensional images are time-sequentially juxtaposed along a time axis, whereby a four-dimensional image is constructed.

Herein, data is gray-scale data of, for example, eight bits or sixteen bits long. Alternatively, the data may be color data of sixteen bits long or binary-coded data of 0s or 1s.

As shown in Fig. 18, during four-dimensional scan of a four-dimensional image, the four-dimensional image is first scanned in the x-axis direction, next in the γ-axis direction, and then in the z-axis direction. Finally, the four-dimensional image is scanned in the time-axis (t-axis) direction.

Fig. 19 shows a four-dimensional spatial filter neighboring local domain composed of eighty neighbor pixels. Fig. 20 shows a four-dimensional spatial filter neighboring local domain composed of six hundred and twenty-four neighbor pixels.

[Sixth Embodiment]

A four-dimensional spatial filter that has a size of 3 by 3 by 3 by 3 as shown in Fig. 21 and is used to enhance a contrast may be employed.

A four-dimensional spatial filter that has a size of 5 by 5 by 5 by 5 as shown in Fig. 22 and is used to enhance a contrast may be employed.

[Seventh Embodiment]

Fig. 23 illustrates a four-dimensional spatial filter that depends on CT numbers to enhance a contrast.

As shown in Fig. 24, the four-dimensional spatial filter is applied as described below.

(1) Under the condition that CT numbers are equal to or smaller than a first threshold, that is, CT numbers $\leq$ Th1, the first filter is employed.

(2) Under the condition that CT numbers are larger than the first threshold and equal to or smaller than a second threshold, that is, Th1 < CT numbers $\leq$ Th2, a weighted summation image produced by summating an image to which the first filter is convoluted and an image to which the second filter is convoluted is employed.

(3) Under the condition that CT numbers are larger than the second threshold and equal to or smaller than a third threshold, that is, Th2 < CT numbers $\leq$ Th3, the second filter is employed.

(4) Under the condition that CT numbers are larger than the third threshold and equal to or smaller than a fourth threshold, that is, Th3 < CT numbers $\leq$ Th4, a weighted summation image produced by summating an image to which the first filter is convoluted and an image to which the second filter is convoluted is employed.

(5) Under the condition that CT numbers are equal to or larger than the fourth threshold, that is, Th4 < CT numbers, the first filter is employed.

Consequently, a four-dimensional spatial filter can be applied depending on CT numbers, that is, applied selectively to images of tissues, which exhibit different X-ray absorption coefficients, for the purpose of contrast enhancement. Namely, a four-dimensional spatial filter whose time-axis characteristic or spatial-axis characteristic is adjusted for each tissue can be realized.

[Eighth Embodiment]

Fig. 25 illustrates a four-dimensional spatial filter that depends on CT numbers to alleviate noise.

As shown in Fig. 26, a four-dimensional spatial filter is applied as described below.

(1) Under the condition that CT numbers are equal to or smaller than a first threshold, that is, CT numbers $\leq$ Th1, a second filter is employed.

(2) Under the condition that CT numbers are smaller than the first threshold and equal to or smaller than a second threshold, that is, Th1 < CT numbers $\leq$ Th2, a weighted summation image produced by summating an image to which the second filter is convoluted and an image to which the second filter is convoluted is employed.

(3) Under the condition that CT numbers are smaller than the second threshold and equal to or smaller than a third threshold, that is, Th2 < CT numbers $\leq$ Th3, the first filter is employed.

(4) Under the condition that CT numbers are smaller than the third threshold and equal to or smaller than a fourth threshold, that is, Th3 < CT numbers $\leq$ Th4, a weighted summation image produced by summating an image to which the second filter is convoluted and an image to which the first filter is convoluted is employed.

(5) Under the condition that CT numbers are equal to or larger than the fourth threshold, that is, Th4 < CT numbers, the second filter is employed.

Consequently, a four-dimensional spatial filter can be applied depending on CT numbers, that is, applied selectively to images of tissues, which exhibit different X-ray absorption coefficients, for the purpose of noise alleviation.

Namely, a four-dimensional spatial filter whose time-axis or spatial-axis characteristic is adjusted for each tissue can be realized.

[Ninth Embodiment]

Fig. 27 illustrates a vascular structure.

Fig. 28 illustrates three-dimensional images time-sequentially produced by an X-ray CT system, that is, a four-dimensional image. The four-dimensional image expresses a change in the distribution of a contrast medium caused by blood flow.

Fig. 29 describes a sequence of vascular volume measurement.

At step 1, a four-dimensional image is received. For example, time-sequential three-dimensional images of the same region produced by performing a cine scan using an X-ray CT system are received.

At step 2, a four-dimensional spatial filter designed for noise alleviation according to the eighth embodiment is convoluted to the four-dimensional image. Thus, a signal-to-noise ratio is improved.

At step 3, a four-dimensional spatial filter designed for contrast enhancement according to the seventh embodiment is convoluted to the four-dimensional image having noise alleviated at step 2. Thus, the contrast is enhanced.

At step 4, the four-dimensional image having the contrast thereof enhanced is binary-coded. The binary coding may be binary coding based on a fixed threshold or a floating threshold.

At step 5, the binary-coded four-dimensional image is four-dimensionally labeled.

At step 6, as shown in Fig. 30, a four-dimensionally labeled domain is projected in the time-axis (t-axis) direction and thus degenerated into a three-dimensional domain. Consequently, the three-dimensional domain expresses the vascular structure.

At step 7, the three-dimensional domain is used to measure a vascular volume.

Consequently, the volume of a blood vessel can be measured using a small amount of contrast medium.

According to the ninth embodiment, four-dimensional spatial filters designed for contrast enhancement or noise alleviation are employed. Alternatively, spatial filters designed for contour enhancement, smoothing, de-convolution, maximum value filtering, intermediate value filtering, minimum value filtering, abnormal point detection, or the like may be employed. One of the four-dimensional spatial filters designed for noise alleviation or contrast enhancement may be excluded.

[Tenth Embodiment]

The present invention may be such that a storage medium (or recording medium) in which a software program for implementing the constituent feature of any of the aforesaid embodiments is recorded is supplied to a system or apparatus, and a computer (or a CPU or MPU) incorporated in the system or apparatus reads and runs the program stored in the storage medium. In this case, the program itself read from the storage medium implements the aforesaid constituent feature of any of the embodiments, and the storage medium in which the program is stored is included in the present invention. Moreover, when the program read by the computer (operator console) is run, the constituent feature of any of the embodiments is implemented. At this time, an operating system (OS) residing in the computer may perform the whole or part of processing in response to an instruction stated in the program, whereby, the constituent feature of any of the embodiments may be implemented.

When the present invention is applied to the storage medium, programs corresponding part or all of the flowcharts of Fig. 1, Fig. 4 to Fig. 8, and Fig. 29 are stored in the storage medium.

As the storage medium in which the programs are stored, for example, a flexible disk, a hard disk, an optical disk, a magneto-optical disk, a CD-ROM, a magnetic tape, a nonvolatile memory card, a ROM, a DVD-RAM, a DVD-ROM, or a CD-RW may be adopted. Furthermore, the programs may be downloaded over a network (for example, the Internet).

Apparently, the programs can be adapted to firmware.

[Eleventh Embodiment]

In the foregoing embodiments, a four-dimensional image is handled. Alternatively, an N-dimensional image may be constructed based on N dimensions exceeding four dimensions by synthesizing a four-dimensional image with an MR image or a PET image produced by other modality. The N-dimensional image may be adopted as an object of N-dimensional labeling or spatial filtering.

**Claims**

1. Four-dimensional labeling apparatus that labels a four-dimensional image composed of time-sequentially juxtaposed three-dimensional images or a four-dimensional image produced with four parameters as a base, comprising a four-dimensional labeling device (403) for, when a four-dimensional domain is four-dimensionally scanned, determining the label number of a pixel concerned on the basis of label numbers assigned to pixels contained in a four-dimensional neighbor domain.

2. N-dimensional labeling apparatus that labels an N-dimensional image composed of time-sequentially juxtaposed N-1-dimensional images or an N-dimensional image produced with N (N≥4) parameters as a base, comprising an N-dimensional labeling device (403) for, when an N-dimensional domain is N-dimensionally scanned, determining the label number of a pixel concerned on the basis of label numbers assigned to pixels contained in an N-dimensional neighbor domain.

3. Four-dimensional spatial filter apparatus (100) that four-dimensionally spatially filters a four-dimensional image composed of time-sequentially juxtaposed three-dimensional images or a four-dimensional image produced with four parameters as a base, comprising a four-dimensional spatial filter device (1) for, when a four-dimensional image is four-dimensionally scanned, processing the four-dimensional image according to the values of pixels contained in a neighboring local domain of each pixel concerned and the value of the pixel concerned or convoluting a four-dimensional spatial filter to the four-dimensional image.

4. N-dimensional spatial filter apparatus (100) that N-dimensionally spatially filters an N-dimensional image composed of time-sequentially juxtaposed N-1-dimensional images or an N-dimensional image produced with N parameters as a base, comprising an N-dimensional spatial filter device (1) for, when an N-dimensional image is N-dimensionally scanned, processing the N-dimensional image according to the values of pixels contained in a neighboring local domain of each pixel concerned and the value of the pixel concerned, or convoluting an N-dimensional spatial filter to the N-dimensional image.

5. The four-dimensional spatial filter apparatus (100) according to Claim 3, further comprising a processing device (1) capable of performing noise alleviation, contrast enhancement, smoothing, contour enhancement, de-convolution, maximum value filtering, intermediate value filtering, and minimum value filtering.

6. The N-dimensional spatial filter apparatus (100) according to Claim 4, further comprising a processing device (1) capable of performing noise alleviation, contrast enhancement, smoothing, contour enhancement, de-convolution, maximum value filtering, intermediate value filtering, and minimum value filtering.

7. Four-dimensional labeling apparatus that labels a four-dimensional image composed of time-sequentially juxtaposed three-dimensional images, comprising:

    an image input device (402) for receiving the time-sequentially juxtaposed three-dimensional images;
    an image filter device for time-sequentially applying a three-dimensional image filter to the four-dimensional image composed of the time-sequentially received three-dimensional images or applying a four-dimensional image filter to the four-dimensional image;
    an image binary-coding device for binary-coding the filtered image; and
    a four-dimensional labeling device (403) for, when the binary-coded four-dimensional domain is four-dimensionally scanned, determining the label number of a pixel concerned on the basis of label numbers assigned to pixels contained in a four-dimensional neighbor domain.

8. The four-dimensional labeling apparatus according to Claim 7, further comprising a four-dimensional image filter device for applying a four-dimensional image filter for the purpose of noise removal or improvement of a signal-to-noise ratio.

9. The four-dimensional labeling apparatus according to Claim 7, further comprising a four-dimensional image filter device for applying a four-dimensional image filter for the purpose of contrast enhancement.

10. N-dimensional labeling apparatus that labels an N-dimensional image produced with N (N≥4) parameters as a base, comprising:

an image input device (402) for receiving time-sequentially juxtaposed N-1-dimensional images;

an N-dimensional image filter device for applying an N-dimensional image filter to the N-dimensional image composed of the time-sequentially received N-1-dimensional images;

an image binary-coding device for binary-coding the image to which the N-dimensional image filter is applied; and

an N-dimensional labeling device (403) for, when the binary-coded N-dimensional domain is N-dimensionally scanned, determining the label number of a pixel concerned on the basis of label numbers assigned to pixels contained in an N-dimensional neighbor domain.

Fig. 1

START

402

401

Four-dimensional image input unit

Four-dimensional image
(Time-sequential three-dimensional images)

403

406

Four-dimensional labeling unit

Four-dimensional labeling neighbor mask

404

Four-dimensional label concatenation
information storage unit

405

Re-labeling unit

END

# Fig. 2

## Four-dimensional labeling neighbor mask (for 80 neighbor pixels)

(a)

denotes neighbor pixels
denotes a pixel concerned
denotes a labeling neighbor mask

$t_{n-1}$     $t_n$     $t_{n+1}$

When a four-dimensional image is decomposed into three layers of upper, middle, and lower layers, eighty neighbor pixels have a relationship that a distance to the farthest neighbor pixel is equibalent to two pixels.

t ( Time )

(b)

$t_{n-1}$     $t_n$     $t_{n+1}$

z Upper

z Middle

1603

z Lower

$3 \times 3 \times 3 \times 3 - 1 = 80$ pixels

The relationship among eighty neighbor pixels is shown above, and a labeling neighbor mask for the eighty neighbor pixels is shown below

(c)

t ( Time )

$t_{n-1}$     $t_n$     $t_{n+1}$

z Upper

z Middle

1603

z Lower

Fig. 3

**Fig. 4**

```
                        ( START )
                            |
                            |  — S901
                      +-----------+
                      |   i = 0   |
                      +-----------+
                            |
                            |  — S902
                  +---------------------------+
                  | Perform four-dimensional scan |
                  +---------------------------+
                            |
                            |  — S903
                  < Is pixel having pixel >  NO
                  <   value 1 found?      >------+
                            |                     |
                           YES                 S904 —
                            |  — S905      +----------------------+
Plurality of label numbers found          | Adopt 0 as label number |
                  < What are label numbers of >  All 0   +----------------------+
          +-------< pixels contained in neighbor mask? >----+
          |       S907 —           |                        |
  +---------------------+    Only label number j       — S906
  | If label numbers j, k, and l |      — S909     +-------------------------+
  | have relationship of j<k<l,  |  +--------------------+  | Increment i by one,    |
  | adopt j as label number      |  | Adopt j as label number |  | and adopt i as label number |
  +---------------------+    +--------------------+  +-------------------------+
  S908 —        |
  +------------------------------+
  | Produce four-dimensional concatenation |
  | information signifying that pixels having |
  | label numbers j, k, and l are concatenated |
  +------------------------------+
                            |
                            |  — S912
                  < Are all pixels constituting >
              NO  < four-dimensional image scanned? >
                            |
                           YES
                            |  — S913
                  +---------------------+
                  | Perform re-labeling |
                  +---------------------+
                            |
                        ( END )
```

Fig. 5

(0, 0) ⟶ x

g (x, y)

(I, J)

y

Two-dimensional scan

Fig. 6

(0, 0, 0) ⟶ x, y

g (x, y, z)

(I, J, K)

z

Three-dimensional scan

```
          ┌─────────┐
          │  START  │
          └─────────┘
               │
   ┌───────────┼──►
   │  ┌────────▼──────────┐
   │  │ Initialize values x and y │
   │  └────────┬──────────┘
   │           │
   │  ┌────────▼──────────┐
   │  │  Label image g(x, y)  │
   │  └────────┬──────────┘
   │           │
   │  ┌────────▼──────────┐
   │  │    x = x + 1       │
   │  └────────┬──────────┘
   │  NO       │
   └──◄ Is x larger than 1? ►
               │ YES
      ┌────────▼──────────┐
      │   x = 0,  y = y+1  │
      └────────┬──────────┘
      NO       │
   ──────◄ Is y larger than J? ►
               │ YES
          ┌────▼────┐
          │   END   │
          └─────────┘
```

```
          ┌─────────┐
          │  START  │
          └─────────┘
               │
   ┌───────────┤
   │  ┌────────▼──────────┐
   │  │ Initialize values x, y, and z │
   │  └────────┬──────────┘
   │           │
   │  ┌────────▼──────────┐
   │  │   Two-dimensional     │
   │  │ label image g(x, y, z)│
   │  └────────┬──────────┘
   │           │
   │  ┌────────▼──────────┐
   │  │    z = z + 1       │
   │  └────────┬──────────┘
   │  NO       │
   └──◄ Is z larger than k? ►
               │ YES
          ┌────▼────┐
          │   END   │
          └─────────┘
```

Fig. 7

$(0, 0, 0, 0)$ ⟶ x, y, z

g (x, y, z, t)

I, J, K,

t

Four-dimensional scan

START

Initialize x, y, z, and t

Three-dimensional
label image g(x, y, z, t)

t = t + 1

NO — Is t larger than L?

YES

END

Fig. 8

N dimensions

$(0, 0, 0, \cdots 0)$ ⟶

g $(p_1, p_2, \cdots, p_{N-1})$

$(P_1, P_2, \cdots, P_N)$

$p_N$

N-dimensional scan

START

Initialize p1, p2, etc., and pN

N-1-dimensionally label image
g(p1, p2, etc., and pN-1)

$p_N = p_N + 1$

NO — Is pN larger than PN?

YES

END

Fig. 9

(a) 1000

1002
1
2
3

1001

(b) 1000

1
2

1003

Fig. 10

(a)

Label number 1

Label number 2

1

2

Bifurcation

(b)

Label number 1

1

Fig. 11

# Fig. 12

Four-dimensional labeling neighbor mask (for 64 neighbor pixels)

(a)

▨ denotes neighbor pixels
■ denotes a pixel concerned
▨ denotes a labeling neighbor mask

When a four-dimensional image is decomposed into three layers of upper, middle, and lower layers, 64 neighbor pixels have a relationship that a distance to the farthest neighbor pixel is equivalent to a $\sqrt{3}$ pixel

(b)

z Upper
z Middle
z Lower

$3\times3\times5+5\times4-1 = 64$ pixels

The relationship among 64 neighbor pixels is shown above, and a labeling neighbor mask for the 64 neighbor pixels is shown below.

(c)

z Upper
z Middle
z Lower

**Fig. 13** Four-dimensional labeling neighbor mask (for 28 neighbor pixels)

(a)

▨ denotes neighbor pixels
■ denotes a pixel concerned
▧ denotes a labeling neighbor mask

When a four-dimensional image is decomposed into three layers of upper, middle, and lower layers, 28 neighbor pixels have a relationship that a distance to the farthest neighbor pixel is equivalent to a $\sqrt{2}$ pixel.

(b)

$5\times4+3\times3-1 = 28$ pixels

The relationship among 28 neighbor pixels is shown above, and a labeling neighbor mask for the 28 neighbor pixels is shown below.

(c)

## Fig. 14 Four-dimensional labeling neighbor mask (for 8 neighbor pixels)

(a)

▧ denotes neighbor pixels
■ denotes a pixel concerned
▨ denotes a labeling neighbor mask

When a four-dimensional image is decomposed into three layers of upper, middle, and lower layers, 8 neighbor pixels have a relationship that a distance to the farthest neighbor pixel is equivalent to one pixel.

(b)

$1 \times 4 + 5 - 1 = 8$ pixels

The relationship among 8 neighbor pixels is shown above, and a labeling neighbor mask for the 8 neighbor pixels is shown below.

(c)

Fig. 15

Fig. 16    Four-dimensional image
2 1

Fig. 17    Four-dimensional spatial filter

Fig. 18

Fig.19

Neighboring local domain composed of 80 neighbor pixels

( a )

tn-1                    tn                    tn+1

0 ———→ x                                              t (Time)

y   z

When a four-dimensional image is decomposed into three layers of upper, middle, and lower layers, 80 neighbor pixels constitute a neighboring local domain expressed as 3x3x3x3-1. The neighboring local domain is shown below.

( b )

0 ——→ x                                    ————→ t (Time)

y   z

z Upper

z Middle

z Lower

$3\times3\times3\times3-1 = 80$ pixels

▦ denotes neighbor pixels

■ denotes a pixel concerned

# Fig. 20

Neighboring local doamin composed of 624 neighbor pixels

(a)

When a four-dimensional image is vertically decomposed into five layers, 624 neighbor pixels constitute a neighboring local domain expressed as 5x5x5x5-1. The neighboring local domain is shown below.

▨ denotes neighbor pixels

■ denotes a pixel concerned

(b)

# Fig. 21

Example of four-dimensional spatial filter designed for contrast enhancement (3x3x3x3)

3×3×3×3-1 = 80 pixels

a = 2.04
b = -0.1
c = -0.01

Fig. 22    Example of four-dimensional spatial filter designed for contrast enhancement (5x5x5x5)

$a=2.12$
$b=-0.1$    $b \times 8 = -0.8$    } Total 1
$c=-0.01$    $c \times 32 = -0.32$

a:1
Total b:8
c:32

## Fig. 23

Example of four-dimensional spatial filter to be applied depending on
CT numbers for contrast enhancement

c : 1

b : 1
c : 6

a : 1
b : 6
c : 18

b : 1
c : 6

c : 1

## Fig. 24

(Coefficients for first filter)
a  = 2.12
b  = -0.1
c  = -0.01

(Coefficients for second filter)
a  = 1
b  = 0
c  = 0

## Fig. 25

Example of four-dimensional spatial filter to be applied depending on
CT numbers for noise alleviation

c : 1

b : 1
c : 6

a : 1
b : 6
c : 18

b : 1
c : 6

c : 1

## Fig. 26

(Coefficients for first filter)
a = 0.28
b = 0.05   b×8 = 0.4   } Total 1
c = 0.01   c×32 = 0.32

(Coefficients for second filter)
a = 1
b = 0
c = 0

weight coefficient

Weight coefficient
for second filter

Weight coefficient
for first filter

CT Number

Th1    Th2         Th3    Th4
First  Second      Third  Fourth
threshold threshold threshold threshold

## Fig. 27

Vascular structure

## Fig. 28

Four-dimensional image (time-sequential three-dimensional images)

(a)  th-2

(b)  th-1

(c)  th

(d)  th+1

(e)  th+2

Fig. 29

```
                                                    ┌─Step 1
        ┌──────────────────────────────┐
        │ Receive four-dimensional image│
        └──────────────────────────────┘
                       │                       ┌─ Step 2
  ┌────────────────────────────────────────────────────┐
  │ Convolute noise alleviation filter to four-dimensional image│
  └────────────────────────────────────────────────────┘
                       │                     ┌─Step 3
  ┌──────────────────────────────────────────────────────┐
  │ Convolute contrat enhancement filter to four-dimensional image│
  └──────────────────────────────────────────────────────┘
                       │                    ┌─Step 4
        ┌──────────────────────────────┐
        │ Binary-code four-dimensional image│
        └──────────────────────────────┘
                       │                    ┌─Step 5
        ┌──────────────────────────────┐
        │ Four-dimensionally label image│
        └──────────────────────────────┘
                       │                   ┌─Step 6
  ┌──────────────────────────────────────────────┐
  │ Project four-dimensionally labeled domain in t-axis│
  │ (time-axis) direction so as to degenerate domain into│
  │          three-dimensional domain            │
  └──────────────────────────────────────────────┘
                       │                   ┌─Step 7
  ┌──────────────────────────────────────────────────┐
  │ Measure vascular volume using three-dimensional domain│
  └──────────────────────────────────────────────────┘
```

Fig. 30

th-2

th-1

th

th+1

th+2

t (Time)

A four-dimensionally labeled domain is projected in the t-axis (time-axis) direction to be degenerated into a three-dimensional domain.

Three-dimensional domain expressing vascular structure.

# Fig. 31

(a)

(b)

**Fig. 32**

Three-dimensional labeling

(a)

200

201 203
202 205
204 206
207

Two-dimensional labeling neighbor mask
(for eight neighbor pixels)

Pixel concerned

(b)

.. **Fig. 33**

Two-dimensional labeling neighbor mask

(a) for eight neighbor pixels

The relationship among eight
neighbor pixels is as shown above, and
a labeling neighbor mask is shown below

Scanning direction

(b) for four neighbor pixels

The relationship among four
neighbor pixels is as shown above, and
a labeling neighbor mask is shown below

Scanning direction

denotes neighbor pixels

denotes a pixel concerned

denotes a labeling neighbor mask

# Fig. 34

Three-dimensional image and two-dimensional images

( a ) 300

302

l

301

x

y

z

( b ) 300b

301b

x

y

( c ) 300c

301c 303c

302c

( d ) 300d

301d 303d

302d

( e ) 300e

301e

302e

( f ) 300f

301f

302f

## Fig. 35

Three-dimensional labeling neighbor mask (for 26 neighbor pixels)

(a)

z Upper

z Middle

z Lower

denotes neighbor pixels

denotes a pixel concerned

denotes a labeling neighbor mask

When a three-dimensional image is decomposed into three layers of upper, middle, and lower layers, 26 neighbor pixels have a relationship that a distance to the farthest neighbor pixel is equivalent to a $\sqrt{3}$ pixel

(b)

z Upper

z Middle

z Lower

3×3×3-1 = 26 pixels

(c)

The relationship among 26 neighbor pixels is shown in the left, and a labeling neighbor mask for the 26 neighbor pixels is shown in the right.

Fig. 36

## Fig. 37

Three-dimensional labeling neighbor mask (for eighteen neighbor pixels)

⊠ denotes neighbor pixels

■ denotes a pixel concerned

▨ denotes a labeling neighbor mask

When a three-dimensional image is decomposed into three layers of upper, middle, and lower layers, eighteen neighbor pixels have a relationship that a distance to the farthest neighbor pixel is equivalent to a $\sqrt{2}$ pixel

(a)  (b)

z Upper
z Middle
z Lower

The relationship among eighteen neighbor pixels is shown in the left,
and a labeling neighbor mask for the eighteen neighbor pixels is shown in the right.

## Fig. 38

Three-dimensional labeling neighbor mask (for six neighbor pixels)

When a three-dimensional image is decomposed into three layers of upper, middle, and lower layers, six neighbor pixels have a relationship that a distance to the farthest neighbor pixel is equivalent to one pixel

(a)  (b)

z Upper
z Middle
z Lower

The relationship among six neighbor pixels is shown above left,
and a labeling neighbor mask for the six neighbor pixels is shown above right.

45

Fig. 39

(a) for eight neighbor pixels lined
in three rows and three columns

3x3-1 = 8

(b) for 24 neighbor pixels lined
in five rows and five columns

5x5-1 = 24

denotes neighbor pixels

denotes a pixel concerned

# Fig. 40

Neighboring local domain composed of 26 neighbor pixels

(a)

denotes neighbor pixels

denotes a pixel concerned

When a three-dimensional image is decomposed into three layers of upper, middle, and lower layers, 26 neighbor pixels constitute a neighboring local domain expressed as 3x3x3-1. The neighboring local domain is shown below.

(b)

## Fig. 41

Neighboring local domain composed of 124 neighbor pixels

When a three-dimensional image is decomposed into five vertical layers,
124 neighbor pixels constitute a neighboring local domain expressed as 5x5x5-1.
The neighboring local domain is shown below.

denotes neighbor pixels

denotes a pixel concerned